# EUROPEAN PATENT SPECIFICATION

(11) **EP 3 981 199 B1**
(45) Date of publication and mention of the grant of the patent: **11.02.2026**
(21) Application number: 20751326.8
(22) Date of filing: 05.06.2020
(51) Int. Cl.: H04W 48/18, H04W 12/06, H04W 12/40, H04L 9/40

(54) **PERFORMING SERVICE DELIVERY FOR MULTI-USER MOBILE TERMINALS CROSS-REFERENCE TO RELATED APPLICATION**
DURCHFÜHRUNG EINER DIENSTBEREITSTELLUNG FÜR MOBILE ENDGERÄTE FÜR MEHRERE BENUTZER
RÉALISATION D'UNE FOURNITURE DE SERVICE POUR DES TERMINAUX MOBILES MULTI-UTILISATEURS EN RÉFÉRENCE CROISÉE À UNE APPLICATION ASSOCIÉE

(30) Priority: 07.06.2019 US 201962858565 P; 12.09.2019 US 201962899202 P
(43) Date of publication of application: 13.04.2022
(73) Proprietor: InterDigital Patent Holdings, Inc., Wilmington, DE 19809 (US)
(72) Inventor: STARSINIC, Michael F., Newtown, Pennsylvania 18940 (US); LY, Quang, North Wales, Pennsylvania 19454 (US); LI, Hongkun, Malvern, Pennsylvania 19355 (US); NINGLEKHU, Jiwan L., Conshohocken, Pennsylvania 19428 (US); MLADIN, Catalina Mihaela, Hatboro, Pennsylvania 19040 (US); ADJAKPLE, Pascal M., Great Neck, New York 11024 (US)
(74) Representative: D Young & Co LLP
(86) International application number: PCT/US2020/036343
(87) International publication number: WO 2020/247764

(56) References cited:
- WO-A1-2020/043208
- DEUTSCHE TELEKOM: "FS_LUCIA: scope of TR 22.904", vol. SA WG1, no. Fukuoka, Japan; 20180105 - 20180109, 12 February 2018 (2018-02-12), XP051405760, Retrieved from the Internet <URL:http://www.3gpp.org/ftp/tsg%5Fsa/WG1%5FServ/TSGS1%5F81%5FFukuoka/docs/> [retrieved on 20180212]
- CHINA UNICOM: "FS_LUCIA: Services Configuration of Shared Devices", vol. SA WG1, no. Dubrovnik, Croatia; 20180507 - 20180511, 15 May 2018 (2018-05-15), XP051534320, Retrieved from the Internet <URL:http://www.3gpp.org/ftp/tsg%5Fsa/WG1%5FServ/TSGS1%5F82%5FDubrovnik/docs/S1%2D181516%2Ezip> [retrieved on 20180515]
- SA WG2: "New SID: Study on the Usage of User Identifiers in the 5G System", vol. TSG SA, no. Newport Beach, USA; 20190605 - 20190607, 29 May 2019 (2019-05-29), XP051749085, Retrieved from the Internet <URL:http://www.3gpp.org/ftp/Meetings%5F3GPP%5FSYNC/SA/Docs/SP%2D190450%2Ezip> [retrieved on 20190529]
- CHARTER COMMUNICATIONS ET AL: "Identity storage for UE without NAS and W-5GCAN access to 5GC", vol. SA WG2, no. Dongguan, Parachinar; 20181015 - 20181019, 18 October 2018 (2018-10-18), XP051539887, Retrieved from the Internet <URL:http://www.3gpp.org/ftp/tsg%5Fsa/WG2%5FArch/TSGS2%5F129%5FDongguan/Docs/S2%2D1810995%2Ezip> [retrieved on 20181018]
- "3rd Generation Partnership Project; Technical Specification Group Services and System Aspects; Study on user centric identifiers and authentication (Release 16)", 3GPP STANDARD; TECHNICAL SPECIFICATION; 3GPP TR 22.904, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V16.1.0, 21 September 2018 (2018-09-21), pages 1 - 20, XP051487104
- "3rd Generation Partnership Project; Technical Specification Group Services and System Aspects; Procedures for the 5G System; Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.2, 1 April 2019 (2019-04-01), pages 1 - 419, XP051723248

## Description

### CROSS-REFERENCE TO RELATED APPLICATION

This application claims the benefit of U.S. Provisional Application No. 62/858,565, filed June 7, 2019, and U.S. Provisional Application No. 62/899,202, filed September 12, 2019.

### FIELD

The present disclosure relates generally to wireless communications, and more particularly to wireless communications systems, devices, methods, and computer readable medium with computer-executable instructions for authenticating a user and linking a user with a mobile terminals' subscription.

### BACKGROUND

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Non-patent document 3GPP TS 23.502 defines the Stage 2 procedures and Network Function Services for the 5G system architecture and for the policy and charging control framework.

Reference [1], non-patent document 3GPP TR 22.904, describes use cases where it would be advantageous for the 3GPP System to identify the user of a UE.

One use case from reference [1] describes a scenario where two children, Lucy and Linus, sometimes use their mother's UE. It is desirable to enhance the 3GPP System so that the network can recognize when Lucy or Linus is using the UE so that the network provide the UE with different services depending on who is using the UE. For example, the network may provide web filtering when Lucy or Linus is using the UE. Furthermore, the network may apply different time restrictions for each user. This scenario implies that the network maintains a profile for each user and that the profile includes information about what UE(s) (i.e. subscription(s)) the user may use to access the network and what services each user is allowed to access.

Thus, the network should consider who is using the UE when granting access to services.

### SUMMARY

The invention is defined by the appended claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

The scope of the present disclosure is best understood from the following detailed description of exemplary embodiments when read in conjunction with the accompanying drawings, wherein:
FIG. 1A is a system diagram that shows an example 3GPP architecture;
FIG. 1B is a system diagram that shows an example of a Radio Access Network (RAN) architecture and a core network architecture;
FIG. 1C is a system diagram that shows an example of a Radio Access Network (RAN) architecture and a core network architecture;
FIG. 1D is a system diagram that shows an example of a Radio Access Network (RAN) architecture and a core network architecture;
FIG. 1E is a system diagram that shows an example 3GPP architecture;
FIG. 1F is a system diagram of an example apparatus or device configured for wireless communications;
FIG. 1G is a system diagram that shows an example of a computing system used in a communication network;
FIG. 2 shows a 5G UE authentication procedure in accordance with an exemplary embodiment;
FIG 3. shows a Policy Set Entry in accordance with an exemplary embodiment;
FIG. 4 shows an EAP architecture in accordance with an exemplary embodiment;
FIG. 5 shows a network slice-specific authentication and authorization procedure in accordance with an exemplary embodiment;
FIG. 6 shows a UE initiated link procedure in accordance with an exemplary embodiment;
FIG. 7 shows a procedure to obtain a user-aware allowed NSSAI in accordance with an exemplary embodiment;
FIG. 8 shows policy set entry association information in accordance with an exemplary embodiment; and
FIG. 9 shows a GUI for linking and unlinking user IDs in accordance with an exemplary embodiment.
FIG. 10 shows a procedure for PDU Session Establishment authentication/authorization by a DN-AAA server.
FIG. 11 shows a procedure for UE-requested PDU Session Establishment for non-roaming and roaming with local breakout.
FIG. 12 shows a procedure for UE or network requested PDU Session Modification (non-roaming and roaming with local breakout).
FIG. 13 shows a QoS rules information element.
FIG. 14 shows QoS rule (u=m+2).
FIG. 15 shows a format of user centric QoS rules IE.
FIG. 16 shows a format of user centric QoS rules IE with multiple User IDs.
FIG. 17 shows an enhanced procedure for UE-requested PDU Session Establishment for non-roaming and roaming with local breakout with UCQRs delivery.
FIG. 18 shows an enhanced procedure for UE or network requested PDU Session Modification (for non-roaming and roaming with local breakout) with UCQRs delivery.
FIG. 19 shows an enhanced Network Slice-Specific Authentication and Authorization procedure with UCQRs delivery.
FIG. 20 shows an enhanced procedure for PDU Session Establishment authentication/authorization by a DN-AAA server with UCQRs delivery.
FIG. 21 shows a format of user centric QoS rules IE with implicit User ID(s) Indication.
FIG. 22 shows a GUI of a multi-user UE receiving UCQRs in accordance with an exemplary embodiment.

Further areas of applicability of the present disclosure will become apparent from the detailed description provided hereinafter. It should be understood that the detailed description of exemplary embodiments is intended for illustration purposes only and are, therefore, not intended to necessarily limit the scope of the disclosure.

### DETAILED DESCRIPTION

The 3rd Generation Partnership Project (3GPP) develops technical standards for cellular telecommunications network technologies, including radio access, the core transport network, and service capabilities - including work on codecs, security, and quality of service. Recent radio access technology (RAT) standards include WCDMA (commonly referred as 3G), LTE (commonly referred as 4G), LTE-Advanced standards, and New Radio (NR), which is also referred to as "5G". 3GPP NR standards development is expected to continue and include the definition of next generation radio access technology (new RAT), which is expected to include the provision of new flexible radio access below 7 GHz, and the provision of new ultra-mobile broadband radio access above 7 GHz. The flexible radio access is expected to consist of a new, non-backwards compatible radio access in new spectrum below 7 GHz, and it is expected to include different operating modes that may be multiplexed together in the same spectrum to address a broad set of 3GPP NR use cases with diverging requirements. The ultra-mobile broadband is expected to include cmWave and mmWave spectrum that will provide the opportunity for ultra-mobile broadband access for, e.g., indoor applications and hotspots. In particular, the ultra-mobile broadband is expected to share a common design framework with the flexible radio access below 7 GHz, with cmWave and mmWave specific design optimizations.

3GPP has identified a variety of use cases that NR is expected to support, resulting in a wide variety of user experience requirements for data rate, latency, and mobility. The use cases include the following general categories: enhanced mobile broadband (eMBB) ultra-reliable low-latency Communication (URLLC), massive machine type communications (mMTC), network operation (e.g., network slicing, routing, migration and interworking, energy savings), and enhanced vehicle-to-everything (eV2X) communications, which may include any of Vehicle-to-Vehicle Communication (V2V), Vehicle-to-Infrastructure Communication (V2I), Vehicle-to-Network Communication (V2N), Vehicle-to-Pedestrian Communication (V2P), and vehicle communications with other entities. Specific service and applications in these categories include, e.g., monitoring and sensor networks, device remote controlling, bi-directional remote controlling, personal cloud computing, video streaming, wireless cloud-based office, first responder connectivity, automotive ecall, disaster alerts, real-time gaming, multi-person video calls, autonomous driving, augmented reality, tactile internet, virtual reality, home automation, robotics, and aerial drones to name a few. All of these use cases and others are contemplated herein.

The following is a list of acronyms relating to service level and core network technologies that may appear in the below description. Unless otherwise specified, the acronyms used herein refer to the corresponding term listed below.

**Table 1. Abbreviations**

| | |
|---|---|
| 5GC | 5G Core Network |
| 5QI | 5G QoS Identifier |
| AAA | Authentication, Authorization, and Accounting |
| 5GC | 5G Core Network |
| AF | Application Function |
| AMF | Access and Mobility Management Function |
| ANDSP | Access Network Discovery and Selection Policy |
| ARP | Allocation Retention Priority |
| AUSF | Authentication Server Function |
| CDR | Charging Data Record |
| DNN | Data Network Name |
| DL | Downlink |
| DN | Data Network |
| DQR | Default QoS Rule Indication |
| EAP | Extensible Authentication Protocol |
| GUI | Graphical User Interface |
| GBR | Guaranteed Bit Rate |
| GFBR | Guaranteed Flow Bit Rate |
| GUTI | Globally Unique Temporary Identifier |
| ID | Identifier |
| IE | Information Element |
| IEI | Information Element Identifier |
| HPLMN | Home PLMN |
| IMEI | International Mobile Equipment Identity |
| IMSI | International Mobile Subscriber Identity |
| MCC | Mobile Country Code |
| MFBR | Maximum Flow Bit Rate |
| MNC | Mobile Network Code |
| MNO | Mobile Network Operator |
| MSIN | Mobile Subscription Identification Number |
| NAS | Non-Access Stratum |
| NF | Network Function |
| 5GC | 5G Core Network |
| NRF | Network Repository Function |
| NSSP | Network Slice Selection Policy |
| NSSAI | Network Slice Selection Assistance Information |
| PCC | Policy Control and Charging |
| PCF | Policy Control Function |
| PDU | Protocol Data Unit |
| PDR | Packet Detection Rule |
| PEI | Permanent Equipment Identifier |
| PLMN | Public Land Mobile Network |
| PSI | Policy Section Identifier |
| QoS | Quality of Service |
| QFI | QoS Flow ID |
| QRI | QoS Rule Identifier |
| RQA | Reflective QoS Attribute |
| (R)AN | (Radio)Access Network |
| SD | Slice Differentiator |
| UL | Uplink |
| SIM | Subscriber Identification Module |
| S-NSSAI | Single NSSAI |
| SST | Slice/Service Type |
| SUCI | Subscription Concealed Identifier |
| SUPI | Subscription Permanent Identifier |
| UDM | User Data Management |
| UDR | Unified Data Repository |
| UE | User Equipment |
| UPF | User Plane Function |
| URSP | UE Route Selection Policy |
| VPLMN | Visited PLMN |

### Example Communication System and Networks

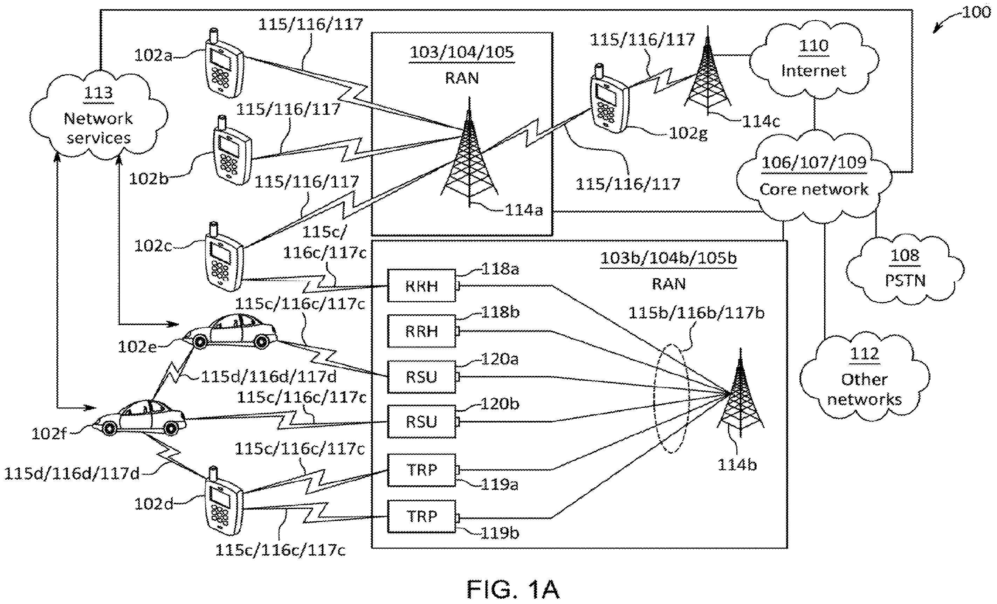

Figure 1A illustrates an example communications system 100 in which the systems, methods, and apparatuses described and claimed herein may be used. The communications system 100 may include wireless transmit/receive units (WTRUs) 102a, 102b, 102c, 102d, 102e, 102f, and/or 102g, which generally or collectively may be referred to as WTRU 102 or WTRUs 102. The communications system 100 may include, a radio access network (RAN) 103/104/105/103b/104b/105b, a core network 106/107/109, a public switched telephone network (PSTN) 108, the Internet 110, other networks 112, and Network Services 113. 113. Network Services 113 may include, for example, a V2X server, V2X functions, a ProSe server, ProSe functions, IoT services, video streaming, and/or edge computing, etc.

It will be appreciated that the concepts disclosed herein may be used with any number of WTRUs, base stations, networks, and/or network elements. Each of the WTRUs 102 may be any type of apparatus or device configured to operate and/or communicate in a wireless environment. In the example of Figure 1A, each of the WTRUs 102 is depicted in Figures 1A-1E as a handheld wireless communications apparatus. It is understood that with the wide variety of use cases contemplated for wireless communications, each WTRU may comprise or be included in any type of apparatus or device configured to transmit and/or receive wireless signals, including, by way of example only, user equipment (UE), a mobile station, a fixed or mobile subscriber unit, a pager, a cellular telephone, a personal digital assistant (PDA), a smartphone, a laptop, a tablet, a netbook, a notebook computer, a personal computer, a wireless sensor, consumer electronics, a wearable device such as a smart watch or smart clothing, a medical or eHealth device, a robot, industrial equipment, a drone, a vehicle such as a car, bus or truck, a train, or an airplane, and the like.

The communications system 100 may also include a base station 114a and a base station 114b. In the example of Figure 1A, each base stations 114a and 114b is depicted as a single element. In practice, the base stations 114a and 114b may include any number of interconnected base stations and/or network elements. Base stations 114a may be any type of device configured to wirelessly interface with at least one of the WTRUs 102a, 102b, and 102c to facilitate access to one or more communication networks, such as the core network 106/107/109, the Internet 110, Network Services 113, and/or the other networks 112. Similarly, base station 114b may be any type of device configured to wiredly and/or wirelessly interface with at least one of the Remote Radio Heads (RRHs) 118a, 118b, Transmission and Reception Points (TRPs) 119a, 119b, and/or Roadside Units (RSUs) 120a and 120b to facilitate access to one or more communication networks, such as the core network 106/107/109, the Internet 110, other networks 112, and/or Network Services 113. RRHs 118a, 118b may be any type of device configured to wirelessly interface with at least one of the WTRUs 102, e.g., WTRU 102c, to facilitate access to one or more communication networks, such as the core network 106/107/109, the Internet 110, Network Services 113, and/or other networks 112.

TRPs 119a, 119b may be any type of device configured to wirelessly interface with at least one of the WTRU 102d, to facilitate access to one or more communication networks, such as the core network 106/107/109, the Internet 110, Network Services 113, and/or other networks 112. RSUs 120a and 120b may be any type of device configured to wirelessly interface with at least one of the WTRU 102e or 102f, to facilitate access to one or more communication networks, such as the core network 106/107/109, the Internet 110, other networks 112, and/or Network Services 113. By way of example, the base stations 114a, 114b may be a Base Transceiver Station (BTS), a Node-B, an eNode B, a Home Node B, a Home eNode B, a Next Generation Node-B (gNode B), a satellite, a site controller, an access point (AP), a wireless router, and the like.

The base station 114a may be part of the RAN 103/104/105, which may also include other base stations and/or network elements (not shown), such as a Base Station Controller (BSC), a Radio Network Controller (RNC), relay nodes, etc. Similarly, the base station 114b may be part of the RAN 103b/104b/105b, which may also include other base stations and/or network elements (not shown), such as a BSC, a RNC, relay nodes, etc. The base station 114a may be configured to transmit and/or receive wireless signals within a particular geographic region, which may be referred to as a cell (not shown). Similarly, the base station 114b may be configured to transmit and/or receive wired and/or wireless signals within a particular geographic region, which may be referred to as a cell (not shown). The cell may further be divided into cell sectors. For example, the cell associated with the base station 114a may be divided into three sectors. Thus, for example, the base station 114a may include three transceivers, e.g., one for each sector of the cell. The base station 114a may employ Multiple-Input Multiple Output (MIMO) technology and, therefore, may utilize multiple transceivers for each sector of the cell, for instance.

The base station 114a may communicate with one or more of the WTRUs 102a, 102b, 102c, and 102g over an air interface 115/116/117, which may be any suitable wireless communication link (e.g., Radio Frequency (RF), microwave, infrared (IR), ultraviolet (UV), visible light, cmWave, mmWave, etc.). The air interface 115/116/117 may be established using any suitable Radio Access Technology (RAT).

The base station 114b may communicate with one or more of the RRHs 118a and 118b, TRPs 119a and 119b, and/or RSUs 120a and 120b, over a wired or air interface 115b/116b/117b, which may be any suitable wired (e.g., cable, optical fiber, etc.) or wireless communication link (e.g., RF, microwave, IR, UV, visible light, cmWave, mmWave, etc.). The air interface 115b/116b/117b may be established using any suitable RAT.

The RRHs 118a, 118b, TRPs 119a, 119b and/or RSUs 120a, 120b, may communicate with one or more of the WTRUs 102c, 102d, 102e, 102f over an air interface 115c/116c/117c, which may be any suitable wireless communication link (e.g., RF, microwave, IR, ultraviolet UV, visible light, cmWave, mmWave, etc.) The air interface 115c/116c/117c may be established using any suitable RAT.

The WTRUs 102 may communicate with one another over a direct air interface 115d/116d/117d, such as Sidelink communication which may be any suitable wireless communication link (e.g., RF, microwave, IR, ultraviolet UV, visible light, cmWave, mmWave, etc.) The air interface 115d/116d/117d may be established using any suitable RAT.

The communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, or RRHs 118a, 118b,TRPs 119a, 119b and/or RSUs 120a and 120b in the RAN 103b/104b/105b and the WTRUs 102c, 102d, 102e, and 102f, may implement a radio technology such as Universal Mobile Telecommunications System (UMTS) Terrestrial Radio Access (UTRA), which may establish the air interface 115/116/117 and/or 115c/116c/117c respectively using Wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

The base station 114a in the RAN 103/104/105 and the WTRUs 102a, 102b, 102c, and 102g, or RRHs 118a and 118b, TRPs 119a and 119b, and/or RSUs 120a and 120b in the RAN 103b/104b/105b and the WTRUs 102c, 102d, may implement a radio technology such as Evolved UMTS Terrestrial Radio Access (E-UTRA), which may establish the air interface 115/116/117 or 115c/116c/117c respectively using Long Term Evolution (LTE) and/or LTE-Advanced (LTE-A), for example. The air interface 115/116/117 or 115c/116c/117c may implement 3GPP NR technology. The LTE and LTE-A technology may include LTE D2D and/or V2X technologies and interfaces (such as Sidelink communications, etc.) Similarly, the 3GPP NR technology may include NR V2X technologies and interfaces (such as Sidelink communications, etc.)

The base station 114a in the RAN 103/104/105 and the WTRUs 102a, 102b, 102c, and 102g or RRHs 118a and 118b, TRPs 119a and 119b, and/or RSUs 120a and 120b in the RAN 103b/104b/105b and the WTRUs 102c, 102d, 102e, and 102f may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114c in Figure 1A may be a wireless router, Home Node B, Home eNode B, or access point, for example, and may utilize any suitable RAT for facilitating wireless connectivity in a localized area, such as a place of business, a home, a vehicle, a train, an aerial, a satellite, a manufactory, a campus, and the like. The base station 114c and the WTRUs 102, e.g., WTRU 102e, may implement a radio technology such as IEEE 802.11 to establish a Wireless Local Area Network (WLAN). Similarly, the base station 114c and the WTRUs 102, e.g., WTRU 102d, may implement a radio technology such as IEEE 802.15 to establish a wireless personal area network (WPAN). The base station 114c and the WTRUs 102, e.g., WRTU 102e, may utilize a cellular-based RAT (e.g., WCDMA, CDMA2000, GSM, LTE, LTE-A, NR, etc.) to establish a picocell or femtocell. As shown in Figure 1A, the base station 114c may have a direct connection to the Internet 110. Thus, the base station 114c may not be required to access the Internet 110 via the core network 106/107/109.

The RAN 103/104/105 and/or RAN 103b/104b/105b may be in communication with the core network 106/107/109, which may be any type of network configured to provide voice, data, messaging, authorization and authentication, applications, and/or Voice Over Internet Protocol (VoIP) services to one or more of the WTRUs 102. For example, the core network 106/107/109 may provide call control, billing services, mobile location-based services, pre-paid calling, Internet connectivity, packet data network connectivity, Ethernet connectivity, video distribution, etc., and/or perform high-level security functions, such as user authentication.

Although not shown in Figure 1A, it will be appreciated that the RAN 103/104/105 and/or RAN 103b/104b/105b and/or the core network 106/107/109 may be in direct or indirect communication with other RANs that employ the same RAT as the RAN 103/104/105 and/or RAN 103b/104b/105b or a different RAT. For example, in addition to being connected to the RAN 103/104/105 and/or RAN 103b/104b/105b, which may be utilizing an E-UTRA radio technology, the core network 106/107/109 may also be in communication with another RAN (not shown) employing a GSM or NR radio technology.

The core network 106/107/109 may also serve as a gateway for the WTRUs 102 to access the PSTN 108, the Internet 110, and/or other networks 112. The PSTN 108 may include circuit-switched telephone networks that provide Plain Old Telephone Service (POTS). The Internet 110 may include a global system of interconnected computer networks and devices that use common communication protocols, such as the Transmission Control Protocol (TCP), User Datagram Protocol (UDP), and the internet protocol (IP) in the TCP/IP internet protocol suite. The other networks 112 may include wired or wireless communications networks owned and/or operated by other service providers. For example, the networks 112 may include any type of packet data network (e.g., an IEEE 802.3 Ethernet network) or another core network connected to one or more RANs, which may employ the same RAT as the RAN 103/104/105 and/or RAN 103b/104b/105b or a different RAT.

Some or all of the WTRUs 102a, 102b, 102c, 102d, 102e, and 102f in the communications system 100 may include multi-mode capabilities, e.g., the WTRUs 102a, 102b, 102c, 102d, 102e, and 102f may include multiple transceivers for communicating with different wireless networks over different wireless links. For example, the WTRU 102g shown in Figure 1A may be configured to communicate with the base station 114a, which may employ a cellular-based radio technology, and with the base station 114c, which may employ an IEEE 802 radio technology.

Although not shown in Figure 1A, it will be appreciated that a User Equipment may make a wired connection to a gateway. The gateway maybe a Residential Gateway (RG). The RG may provide connectivity to a Core Network 106/107/109. It will be appreciated that many of the ideas contained herein may equally apply to UEs that are WTRUs and UEs that use a wired connection to connect to a network. For example, the ideas that apply to the wireless interfaces 115, 116, 117 and 115c/116c/117c may equally apply to a wired connection.

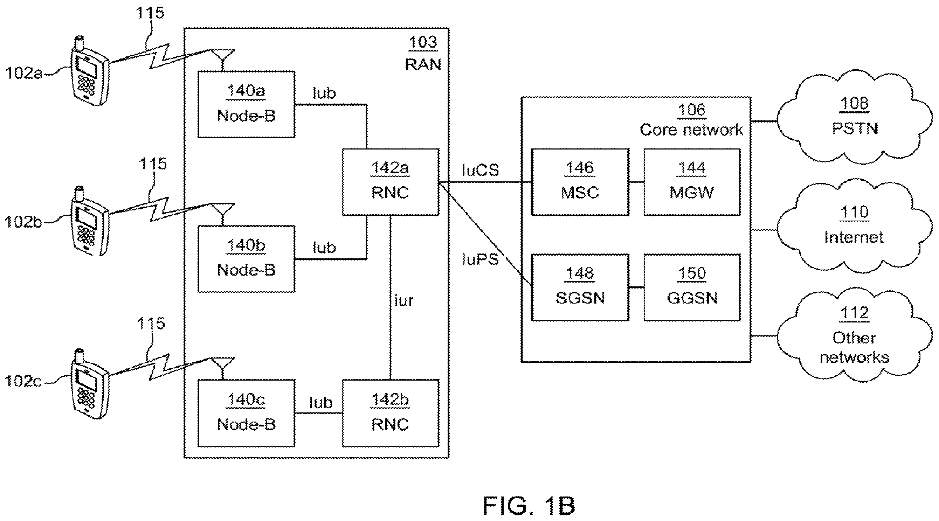

Figure 1B is a system diagram of an example RAN 103 and core network 106. As noted above, the RAN 103 may employ a UTRA radio technology to communicate with the WTRUs 102a, 102b, and 102c over the air interface 115. The RAN 103 may also be in communication with the core network 106. As shown in Figure 1B, the RAN 103 may include Node-Bs 140a, 140b, and 140c, which may each include one or more transceivers for communicating with the WTRUs 102a, 102b, and 102c over the air interface 115. The Node-Bs 140a, 140b, and 140c may each be associated with a particular cell (not shown) within the RAN 103. The RAN 103 may also include RNCs 142a, 142b. It will be appreciated that the RAN 103 may include any number of Node-Bs and Radio Network Controllers (RNCs.)

As shown in Figure 1B, the Node-Bs 140a, 140b may be in communication with the RNC 142a. Additionally, the Node-B 140c may be in communication with the RNC 142b. The Node-Bs 140a, 140b, and 140c may communicate with the respective RNCs 142a and 142b via an Iub interface. The RNCs 142a and 142b may be in communication with one another via an Iur interface. Each of the RNCs 142aand 142b may be configured to control the respective Node-Bs 140a, 140b, and 140c to which it is connected. In addition, each of the RNCs 142aand 142b may be configured to carry out or support other functionality, such as outer loop power control, load control, admission control, packet scheduling, handover control, macro-diversity, security functions, data encryption, and the like.

The core network 106 shown in Figure 1B may include a media gateway (MGW) 144, a Mobile Switching Center (MSC) 146, a Serving GPRS Support Node (SGSN) 148, and/or a Gateway GPRS Support Node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, and 102c with access to circuit-switched networks, such as the PSTN 108, to facilitate communications between the WTRUs 102a, 102b, and 102c, and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, and 102c with access to packet-switched networks, such as the Internet 110, to facilitate communications between and the WTRUs 102a, 102b, and 102c, and IP-enabled devices.

The core network 106 may also be connected to the other networks 112, which may include other wired or wireless networks that are owned and/or operated by other service providers.

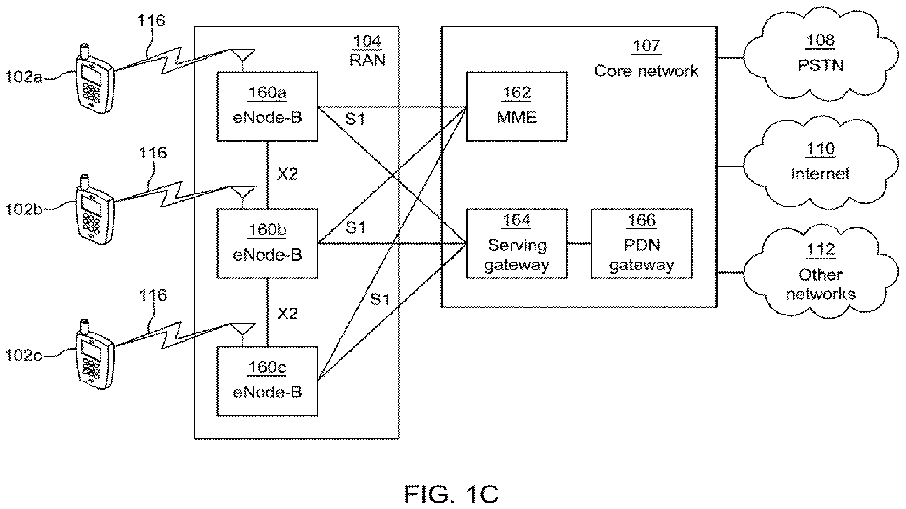

Figure 1C is a system diagram of an example RAN 104 and core network 107. As noted above, the RAN 104 may employ an E-UTRA radio technology to communicate with the WTRUs 102a, 102b, and 102c over the air interface 116. The RAN 104 may also be in communication with the core network 107.

The RAN 104 may include eNode-Bs 160a, 160b, and 160c, though it will be appreciated that the RAN 104 may include any number of eNode-Bs. The eNode-Bs 160a, 160b, and 160c may each include one or more transceivers for communicating with the WTRUs 102a, 102b, and 102c over the air interface 116. For example, the eNode-Bs 160a, 160b, and 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink and/or downlink, and the like. As shown in Figure 1C, the eNode-Bs 160a, 160b, and 160c may communicate with one another over an X2 interface.

The core network 107 shown in Figure 1C may include a Mobility Management Gateway (MME) 162, a serving gateway 164, and a Packet Data Network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, and 102c, bearer activation/deactivation, selecting a particular serving gateway during an initial attach of the WTRUs 102a, 102b, and 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and 160c in the RAN 104 via the S1 interface. The serving gateway 164 may generally route and forward user data packets to/from the WTRUs 102a, 102b, and 102c. The serving gateway 164 may also perform other functions, such as anchoring user planes during inter-eNode B handovers, triggering paging when downlink data is available for the WTRUs 102a, 102b, and 102c, managing and storing contexts of the WTRUs 102a, 102b, and 102c, and the like.

The serving gateway 164 may also be connected to the PDN gateway 166, which may provide the WTRUs 102a, 102b, and 102c with access to packet-switched networks, such as the Internet 110, to facilitate communications between the WTRUs 102a, 102b, 102c, and IP-enabled devices.

The core network 107 may facilitate communications with other networks. For example, the core network 107 may provide the WTRUs 102a, 102b, and 102c with access to circuit-switched networks, such as the PSTN 108, to facilitate communications between the WTRUs 102a, 102b, and 102c and traditional land-line communications devices. For example, the core network 107 may include, or may communicate with, an IP gateway (e.g., an IP Multimedia Subsystem (IMS) server) that serves as an interface between the core network 107 and the PSTN 108. In addition, the core network 107 may provide the WTRUs 102a, 102b, and 102c with access to the networks 112, which may include other wired or wireless networks that are owned and/or operated by other service providers.

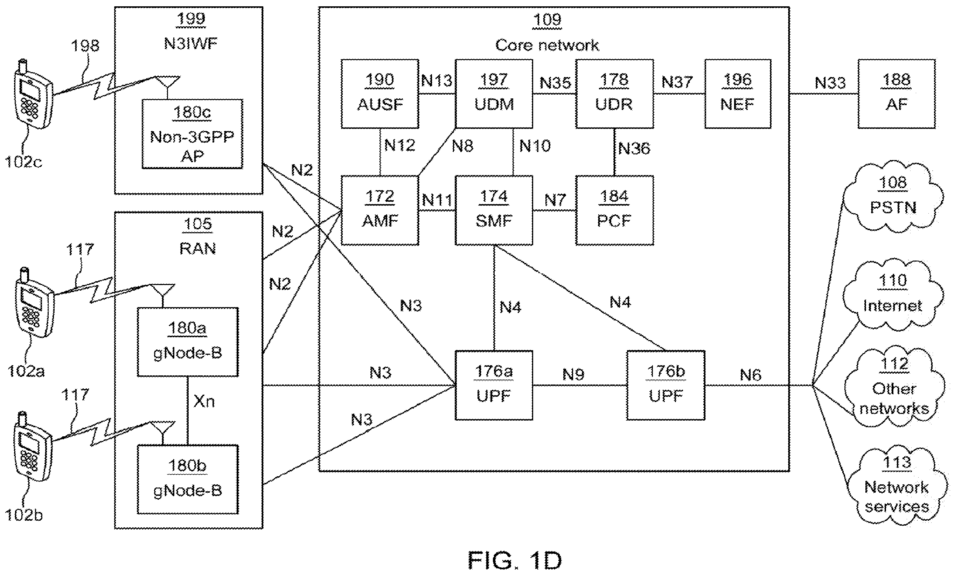

Figure 1D is a system diagram of an example RAN 105 and core network 109. The RAN 105 may employ an NR radio technology to communicate with the WTRUs 102a and 102b over the air interface 117. The RAN 105 may also be in communication with the core network 109. A Non-3GPP Interworking Function (N3IWF) 199 may employ a non-3GPP radio technology to communicate with the WTRU 102c over the air interface 198. The N3IWF 199 may also be in communication with the core network 109.

The RAN 105 may include gNode-Bs 180a and 180b. It will be appreciated that the RAN 105 may include any number of gNode-Bs. The gNode-Bs 180a and 180b may each include one or more transceivers for communicating with the WTRUs 102a and 102b over the air interface 117. When integrated access and backhaul connection are used, the same air interface may be used between the WTRUs and gNode-Bs, which may be the core network 109 via one or multiple gNBs. The gNode-Bs 180a and 180b may implement MIMO, MU-MIMO, and/or digital beamforming technology. Thus, the gNode-B 180a, for example, may use multiple antennas to transmit wireless signals to, and receive wireless signals from, the WTRU 102a. It should be appreciated that the RAN 105 may employ other types of base stations such as an eNode-B. It will also be appreciated the RAN 105 may employ more than one type of base station. For example, the RAN may employ eNode-Bs and gNode-Bs.

The N3IWF 199 may include a non-3GPP Access Point 180c. It will be appreciated that the N3IWF 199 may include any number of non-3GPP Access Points. The non-3GPP Access Point 180c may include one or more transceivers for communicating with the WTRUs 102c over the air interface 198. The non-3GPP Access Point 180c may use the 802.11 protocol to communicate with the WTRU 102c over the air interface 198.

Each of the gNode-Bs 180a and 180b may be associated with a particular cell (not shown) and may be configured to handle radio resource management decisions, handover decisions, scheduling of users in the uplink and/or downlink, and the like. As shown in Figure 1D, the gNode-Bs 180a and 180b may communicate with one another over an Xn interface, for example.

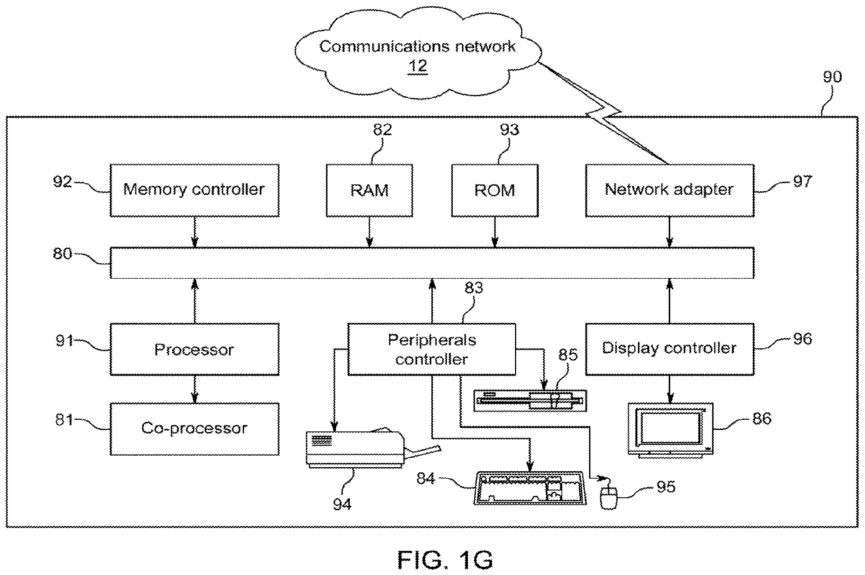

The core network 109 shown in Figure 1D may be a 5G core network (5GC). The core network 109 may offer numerous communication services to customers who are interconnected by the radio access network. The core network 109 comprises a number of entities that perform the functionality of the core network. As used herein, the term "core network entity" or "network function" refers to any entity that performs one or more functionalities of a core network. It is understood that such core network entities may be logical entities that are implemented in the form of computer-executable instructions (software) stored in a memory of, and executing on a processor of, an apparatus configured for wireless and/or network communications or a computer system, such as system 90 illustrated in Figure 1G.

In the example of Figure 1D, the 5G Core Network 109 may include an access and mobility management function (AMF) 172, a Session Management Function (SMF) 174, User Plane Functions (UPFs) 176a and 176b, a User Data Management Function (UDM) 197, an Authentication Server Function (AUSF) 190, a Network Exposure Function (NEF) 196, a Policy Control Function (PCF) 184, a Non-3GPP Interworking Function (N3IWF) 199, a User Data Repository (UDR) 178. While each of the foregoing elements are depicted as part of the 5G core network 109, it will be appreciated that any one of these elements may be owned and/or operated by an entity other than the core network operator. It will also be appreciated that a 5G core network may not consist of all of these elements, may consist of additional elements, and may consist of multiple instances of each of these elements. Figure 1D shows that network functions directly connect to one another, however, it should be appreciated that they may communicate via routing agents such as a diameter routing agent or message buses.

In the example of Figure 1D, connectivity between network functions is achieved via a set of interfaces, or reference points. It will be appreciated that network functions could be modeled, described, or implemented as a set of services that are invoked, or called, by other network functions or services. Invocation of a Network Function service may be achieved via a direct connection between network functions, an exchange of messaging on a message bus, calling a software function, etc.

The AMF 172 may be connected to the RAN 105 via an N2 interface and may serve as a control node. For example, the AMF 172 may be responsible for registration management, connection management, reachability management, access authentication, access authorization. The AMF may be responsible for forwarding user plane tunnel configuration information to the RAN 105 via the N2 interface. The AMF 172 may receive the user plane tunnel configuration information from the SMF via an N11 interface. The AMF 172 may generally route and forward NAS packets to/from the WTRUs 102a, 102b, and 102c via an N1 interface. The N1 interface is not shown in Figure 1D.

The SMF 174 may be connected to the AMF 172 via an N11 interface. Similarly, the SMF may be connected to the PCF 184 via an N7 interface, and to the UPFs 176a and 176b via an N4 interface. The SMF 174 may serve as a control node. For example, the SMF 174 may be responsible for Session Management, IP address allocation for the WTRUs 102a, 102b, and 102c, management and configuration of traffic steering rules in the UPF 176a and UPF 176b, and generation of downlink data notifications to the AMF 172.

The UPF 176a and UPF176b may provide the WTRUs 102a, 102b, and 102c with access to a Packet Data Network (PDN), such as the Internet 110, to facilitate communications between the WTRUs 102a, 102b, and 102c and other devices. The UPF 176a and UPF 176b may also provide the WTRUs 102a, 102b, and 102c with access to other types of packet data networks. For example, Other Networks 112 may be Ethernet Networks or any type of network that exchanges packets of data. The UPF 176a and UPF 176b may receive traffic steering rules from the SMF 174 via the N4 interface. The UPF 176a and UPF 176b may provide access to a packet data network by connecting a packet data network with an N6 interface or by connecting to each other and to other UPFs via an N9 interface. In addition to providing access to packet data networks, the UPF 176 may be responsible for packet routing and forwarding, policy rule enforcement, quality of service handling for user plane traffic, downlink packet buffering.

The AMF 172 may also be connected to the N3IWF 199, for example, via an N2 interface. The N3IWF facilitates a connection between the WTRU 102c and the 5G core network 170, for example, via radio interface technologies that are not defined by 3GPP. The AMF may interact with the N3IWF 199 in the same, or similar, manner that it interacts with the RAN 105.

The PCF 184 may be connected to the SMF 174 via an N7 interface, connected to the AMF 172 via an N15 interface, and to an Application Function (AF) 188 via an N5 interface. The N15 and N5 interfaces are not shown in Figure 1D. The PCF 184 may provide policy rules to control plane nodes such as the AMF 172 and SMF 174, allowing the control plane nodes to enforce these rules. The PCF 184, may send policies to the AMF 172 for the WTRUs 102a, 102b, and 102c so that the AMF may deliver the policies to the WTRUs 102a, 102b, and 102c via an N1 interface. Policies may then be enforced, or applied, at the WTRUs 102a, 102b, and 102c.

The UDR 178 may act as a repository for authentication credentials and subscription information. The UDR may connect to network functions, so that network function can add to, read from, and modify the data that is in the repository. For example, the UDR 178 may connect to the PCF 184 via an N36 interface. Similarly, the UDR 178 may connect to the NEF 196 via an N37 interface, and the UDR 178 may connect to the UDM 197 via an N35 interface.

The UDM 197 may serve as an interface between the UDR 178 and other network functions. The UDM 197 may authorize network functions to access of the UDR 178. For example, the UDM 197 may connect to the AMF 172 via an N8 interface, the UDM 197 may connect to the SMF 174 via an N10 interface. Similarly, the UDM 197 may connect to the AUSF 190 via an N13 interface. The UDR 178 and UDM 197 may be tightly integrated.

The AUSF 190 performs authentication related operations and connects to the UDM 178 via an N13 interface and to the AMF 172 via an N12 interface.

The NEF 196 exposes capabilities and services in the 5G core network 109 to Application Functions (AF) 188. Exposure may occur on the N33 API interface. The NEF may connect to an AF 188 via an N33 interface and it may connect to other network functions in order to expose the capabilities and services of the 5G core network 109.

Application Functions 188 may interact with network functions in the 5G Core Network 109. Interaction between the Application Functions 188 and network functions may be via a direct interface or may occur via the NEF 196. The Application Functions 188 may be considered part of the 5G Core Network 109 or may be external to the 5G Core Network 109 and deployed by enterprises that have a business relationship with the mobile network operator.

Network Slicing is a mechanism that could be used by mobile network operators to support one or more 'virtual' core networks behind the operator's air interface. This involves 'slicing' the core network into one or more virtual networks to support different RANs or different service types running across a single RAN. Network slicing enables the operator to create networks customized to provide optimized solutions for different market scenarios which demands diverse requirements, e.g. in the areas of functionality, performance and isolation.

3GPP has designed the 5G core network to support Network Slicing. Network Slicing is a good tool that network operators can use to support the diverse set of 5G use cases (e.g., massive IoT, critical communications, V2X, and enhanced mobile broadband) which demand very diverse and sometimes extreme requirements. Without the use of network slicing techniques, it is likely that the network architecture would not be flexible and scalable enough to efficiently support a wider range of use cases need when each use case has its own specific set of performance, scalability, and availability requirements. Furthermore, introduction of new network services should be made more efficient.

Referring again to Figure 1D, in a network slicing scenario, a WTRU 102a, 102b, or 102c may connect to an AMF 172, via an N1 interface. The AMF may be logically part of one or more slices. The AMF may coordinate the connection or communication of WTRU 102a, 102b, or 102c with one or more UPF 176a and 176b, SMF 174, and other network functions. Each of the UPFs 176a and 176b, SMF 174, and other network functions may be part of the same slice or different slices. When they are part of different slices, they may be isolated from each other in the sense that they may utilize different computing resources, security credentials, etc.

The core network 109 may facilitate communications with other networks. For example, the core network 109 may include, or may communicate with, an IP gateway, such as an IP Multimedia Subsystem (IMS) server, that serves as an interface between the 5G core network 109 and a PSTN 108. For example, the core network 109 may include, or communicate with a short message service (SMS) service center that facilities communication via the short message service. For example, the 5G core network 109 may facilitate the exchange of non-IP data packets between the WTRUs 102a, 102b, and 102c and servers or applications functions 188. In addition, the core network 170 may provide the WTRUs 102a, 102b, and 102c with access to the networks 112, which may include other wired or wireless networks that are owned and/or operated by other service providers.

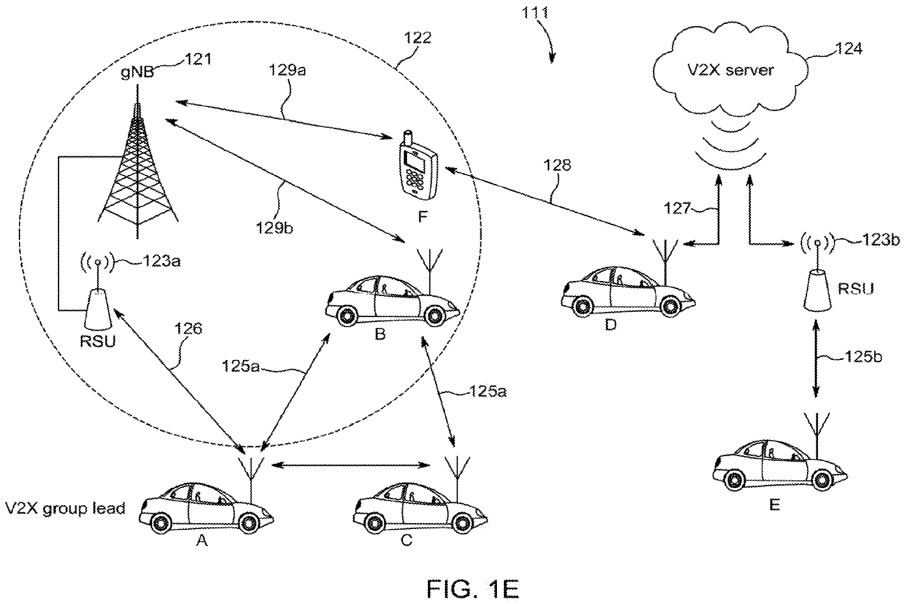

The core network entities described herein and illustrated in Figures 1A, 1C, 1D, and 1E are identified by the names given to those entities in certain existing 3GPP specifications, but it is understood that in the future those entities and functionalities may be identified by other names and certain entities or functions may be combined in future specifications published by 3GPP, including future 3GPP NR specifications. Thus, the particular network entities and functionalities described and illustrated in Figures 1A, 1B, 1C, 1D, and 1E are provided by way of example only, and it is understood that the subject matter disclosed and claimed herein may be embodied or implemented in any similar communication system, whether presently defined or defined in the future.

Figure 1E illustrates an example communications system 111 in which the systems, methods, apparatuses described herein may be used. Communications system 111 may include Wireless Transmit/Receive Units (WTRUs) A, B, C, D, E, F, a base station gNB 121, a V2X server 124, and Road Side Units (RSUs) 123a and 123b. In practice, the concepts presented herein may be applied to any number of WTRUs, base station gNBs, V2X networks, and/or other network elements. One or several or all WTRUs A, B, C, D, E, and F may be out of range of the access network coverage 122. WTRUs A, B, and C form a V2X group, among which WTRU A is the group lead and WTRUs B and C are group members.

WTRUs A, B, C, D, E, F may communicate with each other over a Uu interface 129b via the gNB 121 if they are under the access network coverage (only B and F are shown under the network coverage in Figure 1E). WTRUs A, B, C, D, E, F may communicate with each other directly via a Sidelink (PC5 or NR PC5) interface 125 a,125b, 128, if they are under or out of the access network coverage (e.g., A, C, WTRUs A, B, C, D, E, F may communicate with each other D and E are shown out of the network coverage in Figure 1E).

WTRUs A, B, C, D, E, and F may communicate with RSU 123a or 123b via a Vehicle-to-Network (V2N) 126 or Sidelink interface 125b. WTRUs A, B, C, D, E, and F may communicate to a V2X Server 124 via a Vehicle-to-Infrastructure (V2I) interface 127. WTRUs A, B, C, D, E, and F may communicate to another UE via a Vehicle-to-Person (V2P) interface 128.

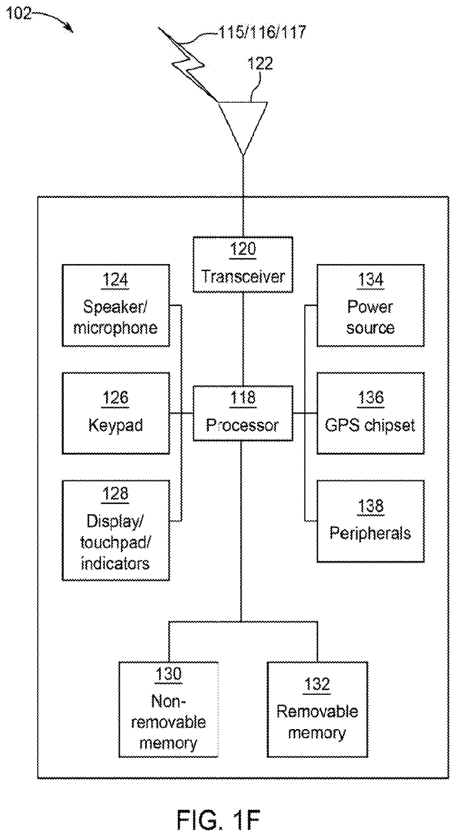

Figure 1F is a block diagram of an example apparatus or device WTRU 102 that may be configured for wireless communications and operations in accordance with the systems, methods, and apparatuses described herein, such as a WTRU 102 of Figure 1A, 1B, 1C, 1D, or 1E. As shown in Figure 1F, the example WTRU 102 may include a processor 118, a transceiver 120, a transmit/receive element 122, a speaker/microphone 124, a keypad 126, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements. Also, the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, a next generation node-B (gNode-B), and proxy nodes, among others, may include some or all of the elements depicted in Figure 1F and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1F depicts the processor 118 and the transceiver 120 as separate components, it will be appreciated that the processor 118 and the transceiver 120 may be integrated together in an electronic package or chip.

The transmit/receive element 122 of a UE may be configured to transmit signals to, or receive signals from, a base station (e.g., the base station 114a of Figure 1A) over the air interface 115/116/117 or another UE over the air interface 115d/116d/117d. For example, the transmit/receive element 122 may be an antenna configured to transmit and/or receive RF signals. The transmit/receive element 122 may be an emitter/detector configured to transmit and/or receive IR, UV, or visible light signals, for example. The transmit/receive element 122 may be configured to transmit and receive both RF and light signals. It will be appreciated that the transmit/receive element 122 may be configured to transmit and/or receive any combination of wireless or wired signals.

In addition, although the transmit/receive element 122 is depicted in Figure 1F as a single element, the WTRU 102 may include any number of transmit/receive elements 122. More specifically, the WTRU 102 may employ MIMO technology. Thus, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, for example NR and IEEE 802.11 or NR and E-UTRA, or to communicate with the same RAT via multiple beams to different RRHs, TRPs, RSUs, or nodes.

The processor 118 of the WTRU 102 may be coupled to, and may receive user input data from, the speaker/microphone 124, the keypad 126, and/or the display/touchpad/indicators 128 (e.g., a liquid crystal display (LCD) display unit or organic light-emitting diode (OLED) display unit. The processor 118 may also output user data to the speaker/microphone 124, the keypad 126, and/or the display/touchpad/indicators 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. The processor 118 may access information from, and store data in, memory that is not physically located on the WTRU 102, such as on a server that is hosted in the cloud or in an edge computing platform or in a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries, solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method.

The processor 118 may further be coupled to other peripherals 138, which may include one or more software and/or hardware modules that provide additional features, functionality, and/or wired or wireless connectivity. For example, the peripherals 138 may include various sensors such as an accelerometer, biometrics (e.g., finger print) sensors, an e-compass, a satellite transceiver, a digital camera (for photographs or video), a universal serial bus (USB) port or other interconnect interfaces, a vibration device, a television transceiver, a hands free headset, a Bluetooth^{®} module, a frequency modulated (FM) radio unit, a digital music player, a media player, a video game player module, an Internet browser, and the like.

The WTRU 102 may be included in other apparatuses or devices, such as a sensor, consumer electronics, a wearable device such as a smart watch or smart clothing, a medical or eHealth device, a robot, industrial equipment, a drone, a vehicle such as a car, truck, train, or an airplane. The WTRU 102 may connect to other components, modules, or systems of such apparatuses or devices via one or more interconnect interfaces, such as an interconnect interface that may comprise one of the peripherals 138.

Figure 1G is a block diagram of an exemplary computing system 90 in which one or more apparatuses of the communications networks illustrated in Figures 1A, 1C, 1D and 1E may be embodied, such as certain nodes or functional entities in the RAN 103/104/105, Core Network 106/107/109, PSTN 108, Internet 110, Other Networks 112, or Network Services 113. Computing system 90 may comprise a computer or server and may be controlled primarily by computer readable instructions, which may be in the form of software, wherever, or by whatever means such software is stored or accessed. Such computer readable instructions may be executed within a processor 91, to cause computing system 90 to do work. The processor 91 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 91 may perform signal coding, data processing, power control, input/output processing, and/or any other functionality that enables the computing system 90 to operate in a communications network. Coprocessor 81 is an optional processor, distinct from main processor 91, that may perform additional functions or assist processor 91. Processor 91 and/or coprocessor 81 may receive, generate, and process data related to the methods and apparatuses disclosed herein.

In operation, processor 91 fetches, decodes, and executes instructions, and transfers information to and from other resources via the computing system's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 may be read or changed by processor 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 90 may contain peripherals controller 83 responsible for communicating instructions from processor 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. The visual output may be provided in the form of a graphical user interface (GUI). Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain communication circuitry, such as for example a wireless or wired network adapter 97, that may be used to connect computing system 90 to an external communications network or devices, such as the RAN 103/104/105, Core Network 106/107/109, PSTN 108, Internet 110, WTRUs 102, or Other Networks 112 of Figures 1A, 1B, 1C, 1D, and 1E, to enable the computing system 90 to communicate with other nodes or functional entities of those networks. The communication circuitry, alone or in combination with the processor 91, may be used to perform the transmitting and receiving steps of certain apparatuses, nodes, or functional entities described herein.

It is understood that any or all of the apparatuses, systems, methods and processes described herein may be embodied in the form of computer executable instructions (e.g., program code) stored on a computer-readable storage medium which instructions, when executed by a processor, such as processors 118 or 91, cause the processor to perform and/or implement the systems, methods and processes described herein. Specifically, any of the steps, operations, or functions described herein may be implemented in the form of such computer executable instructions, executing on the processor of an apparatus or computing system configured for wireless and/or wired network communications. Computer readable storage media includes volatile and nonvolatile, removable and non-removable media implemented in any non-transitory (e.g., tangible or physical) method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which may be used to store the desired information and which may be accessed by a computing system.

### Detailed Description

The present disclosure is directed to a configuration in which a UE is configured to detect certain events that cause it to request that the network authenticate a user and that the network link a user with the UE's subscription. This may result in the network providing the UE with an updated Configured NSSAI. Where each NSSAI in the updated Configured NSSAI is associated with one or more user identifiers.

The disclosure also describes how, one a user is linked with a UE's subscription, the UE may determine to send a new Requested NSSAI and receive a new Allowed NSSAI where the S-NSSAI(s) in the new Requested NSSAI and Allowed NSSAI are associated with User Identifiers.

The disclosure also describes an efficient way of associating User Id(s) with policy information. User Identities may be associated with PSIs so that the format and content of the PSI and URSP policy can be left largely unchanged and that changes in User activity, association, or linking will not result in the network needing to send the UE new PSIs.

The disclosure also describes what events would cause the UE to request updated PSI / User Association information from the network.

### Subscription Identifiers

In the 3GPP system, an IMSI (International Mobile Subscriber Identity) is a subscription identifier. An IMSI consists of 3 fields.
MCC (Mobile Country Code)
MNC (Mobile Network Code)
MSIN (Mobile Subscription Identification Number)
An IMSI is a type of SUPI

### Device Identifiers

In the 3GPP system, an IMEI (International Mobile Equipment Identity) is a device identifier used to identify a UE.

In IEEE 802 system, a MAC (Media Access Control) Address is a device identifier used to identify a network interface controller.

### User Identifiers, User Profile and Subscription

3GPP has studied how 3GPP should be enhanced to support a user-centric authentication layer on top of the existing subscription authentication. The results of this study have been captured in reference [1].

The study evaluated how the 3GPP system can provide different users using the same UE with customized services, how to identify users of devices behind a gateway with a 3GPP subscription (but without the devices having a dedicated 3GPP subscription), and how to use a user identifier being linked to a subscription to access 3GPP services via non-3GPP access.

A User-Identity in 3GPP system should identify a user and a mobile network operator (MNO) that is associated with a user. The MNO has a business relationship with the user, is responsible for authenticating and authorizing user requests, and is responsible for maintaining information record(s) that are associated with the user.

Since the 3GPP User-Identity identifies at least 2 entities (i.e. a user and an MNO), it may have 2 fields. For example, it may be formatted as: "*user-name*@mno-name", where the *user-name* part of the identifier may be an alpha numeric string that resolves to a user identity.

There may be different formats of 3GPP User-Identities. For example, an external format may be used on interfaces that are external to the 5GC and an internal format may be used on interfaces that are internal to the 5GC.

There may also be different types of 3GPP User-Identities. One type of 3GPP User-Identity may identify a person (e.g. a name or an alias). Another type of 3GPP User-Identity may identify a non-3GPP device. For example, application identifier that identifies a smart watch.It is anticipated that the 5GC will maintain a user profile for the various users that it may be aware of. A user profile may contain details about a user in a UE, while a UE subscription may include User ID(s) of the UE's users. User profiles may be linked with subscriptions, where there may be a many to many relations between user profiles and subscriptions. The User ID may behave as the key between a UE/User subscription to a user profile. The linking operation may be based on an event in the network such as an administrator or a third party creating/updating a user profile or subscription. The fact that a user profile is linked with a subscription is an indication in the 5GC that the user may access the system using the UE that is associated with the subscription. User IDs may vary based on the system the users are registered in.

### Registration, Configuration Update, and PDU Session Related Procedures

The 5G Registration, PDU Session Establishment, and Service Request procedures are used to activate, reactivate, and de-activate PDU sessions. Table 2 shows information about these three procedures and the configuration update procedure.

**Table 2. Registration, PDU Establishment, Service Request, and Configuration Update Procedures**

| **Procedure** | **When Triggered** | **Who Can Trigger** | **Impact on PDU Sessions** |
|---|---|---|---|
| Registration | Initial Registration | UE | PDU Sessions can be reactivated |
| | Mobility | | |
| | Periodic | | |
| | Renegotiate Parameters | | |
| PDU Session Establishment | Application Layer Activity that requires a new PDU Session. | UE | Used to create a new PDU session. |
| | | Network (via a Trigger) | Used to move a PDU session between 3GPP and non-3GPP access. |
| | UE activity that causes a PDU session to move between 3GPP and non-3GPP | | |
| Service Request | UE wants to activate a user plane connection for an already established PDU Session. | UE | When responding to a page, UE does not know what PDU Session is needed, so it tells the network what PDU |
| | | Network (via Paging or NAS Notification) | |
| | UE wants to generate uplink signaling (other than registration or de-registration). | | Sessions it can activate. UE will be told what PDU sessions are being activated when RRC Configuration happens. |
| | UE wants to respond to a page or a NAS notification. | | |
| Configuration Update (Parameters that require no UE-Network Negotiation) | AMF wants to change parameters | Network | N/A |
| | PCF wants to provide new policies | UE (via the UE Policy Provisioning Request) | |

### 5GC Authentication Procedure

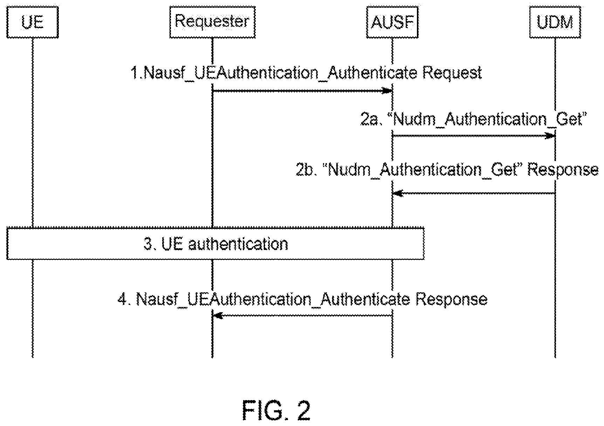

The 5G UE authentication procedure is described in section 5.2.10.2.3 of reference [6]. A copy of the procedure is shown in Figure 2. The AMF may invoke the Nausf_UEAuthentication_Authenticate procedure during UE registration to authenticate the UE, using the UE's SUPI (i.e. IMSI).

### Identifying a Network Slice

A network slice is identified with an S-NSSAI (Single Network Slice Selection Assistance Information). The S-NSSAI consists of a Slice/Service Type (SST) and a Slice Differentiator (SD).

An NSSAI is a collection of S-NSSAI's. There are three types of NSSAI's.

The Configured NSSAI is the NSSAI configured on the UE and contains the list of S-NSSAI's that the UE may use. The UE may have a different configured NSSAI for each PLMN. The configuration may include instructions for how to map the configured NSSAI to the HPLMN configured NSSAI.

The Requested NSSAI is provided to the network by the UE at registration. The network will use it to determine what network nodes should serve the UE and what network slices the UE should be allowed to connect to.

At the completion of registration, the network provides the UE with an Allowed NSSAI. The Allowed NSSAI is a list of S-NSSAI's (i.e. slices) that the UE is allowed to access.

### PDU Sessions

A PDU Session is associated to an S-NSSAI and a DNN.

In a PDU Session establishment request sent to the network, the UE shall provide a PDU Session Identifier. The PDU Session ID is unique per UE and is the identifier used to uniquely identify one of an UE's PDU Sessions. PDU Session ID shall be stored in the UDM to support handover between 3GPP and non-3GPP accesses when different PLMNs are used for the two accesses.

### URSP Rules

URSP (UE Route Selection Policy) rules are policies that are used by the UE to determine how to route outgoing traffic. Traffic can be routed to an established PDU Session, can be offloaded to non-3GPP access outside a PDU Session, or can trigger the establishment of a new PDU Session. The rules are provided by the PCF in the 5GC to the UE.

URSP Rules have two main parts. A Traffic Descriptor Part is used by the UE to determine what traffic the rule applies to. A Route Selection Descriptors (RSD) part that includes descriptions of route(s) (i.e. S-NSSAI, DNN, Access Type, etc.) that may be used to route the data that matches the traffic descriptor.

The UE may also have local preferences that can be used to determine how to treat traffic. Local preferences take precedence over URSPs.

### Organization of UE Policy Information

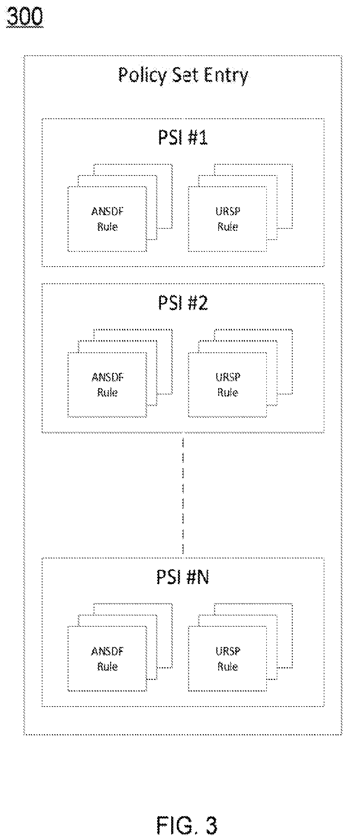

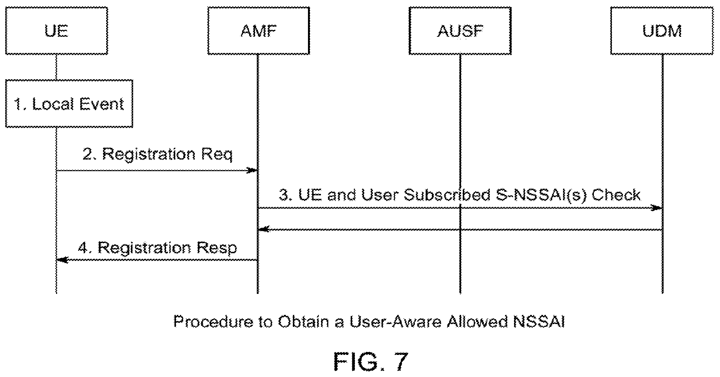

The policy information part of the UE's subscription is organized in the UDR as a Policy Set Entry 300 (e.g., Figure 3). A Policy Set Entry consist of one or more PSI(s). Each PSI consist of zero or more ANDSP and/or URSP policies. This is described in reference [5] and depicted in Figure 7.

Figure 7 may also be considered a representation of how policy information is stored on the UE. The Network sends policy information to the UE with PSI granularity. In other words, a single PSI is the smallest amount of policy information that the network can send to the UE and is the smallest amount of policy information that the UE can reject. A PSI can contain as little as one ANDSP rule or one URSP rule.

### Extensible Authentication Protocol (EAP)

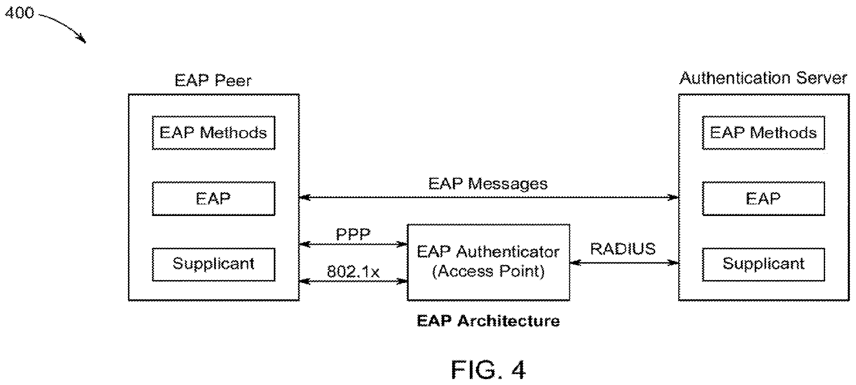

EAP is not an authentication method but rather a common authentication framework that can be used to implement specific authentication methods. In other words, EAP is a protocol that allows the Peer, Authenticator, and Authentication Server to negotiate what authentication method will be used. The selected authentication method is then run inside of the EAP protocol. EAP is defined in RFC 3748 [9]. [9] describes the EAP packet format, procedures, as well as basic functions such as negotiation of the desired authentication mechanism. Figure 4 shows a block diagram of the basic EAP architecture 400. EAP can use Radius or Diameter protocols.

Note that it is not sufficient to describe an authentication mechanism as EAP. There is always some underlying authentication method. There are many EAP methods defined by IETF. This document assumes, for example, that the selected EAP method is EAP-AKA which is based on UMTS-AKA and defined in RFC 4187 [10]. However, the ideas that are presented in this document can be used regardless of the selected EAP authentication method.

### Slice-Specific Authentication and Authorization

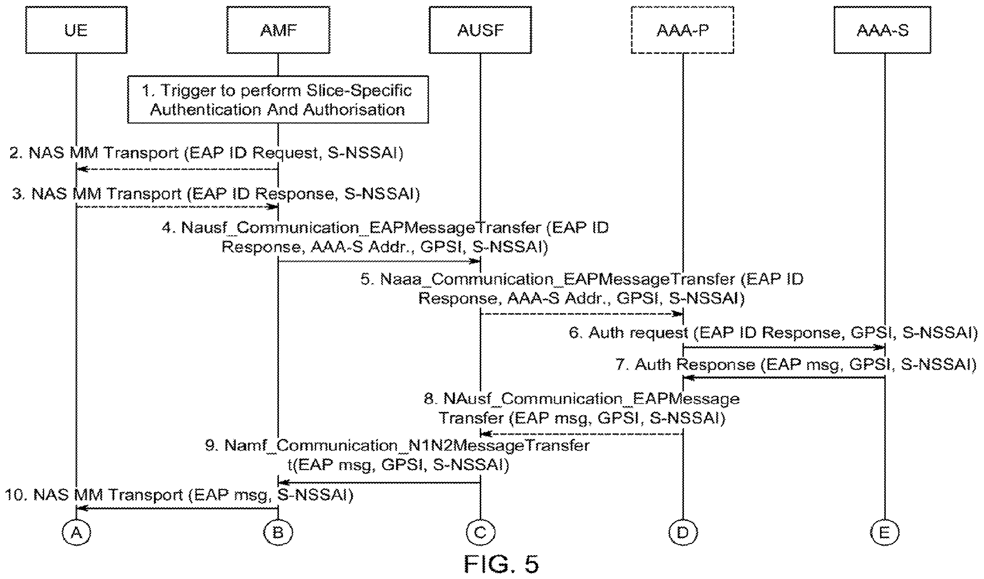

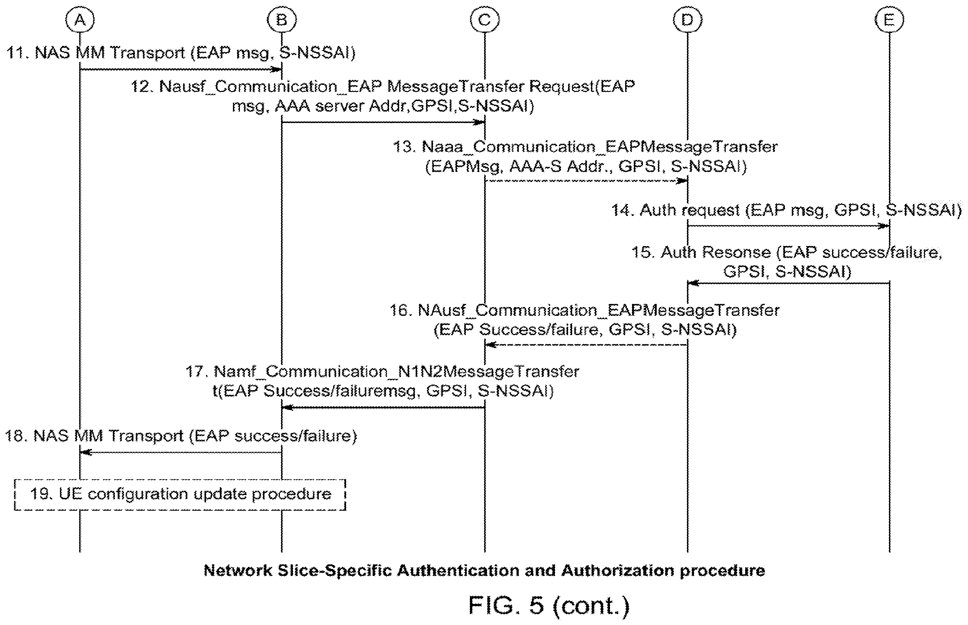

In Release 16 of the 5G System, 3GPP has agreed to add a procedure to support Slice-Specific Authentication and Authorization. The procedure allows the Network to initiate an EAP based procedure with the UE when the UE attempts to register with certain slices (i.e. S-NSSAI's). The EAP based authentication procedure is based on the UE providing a User ID and associated network credentials in order to be authorized to access the slice. The new procedure is described in references [7] and [8] and shown in Figure 5. Figure 5 is copied from reference [8].

### Secondary authorization/authentication by an DN-AAA server during the PDU Session establishment

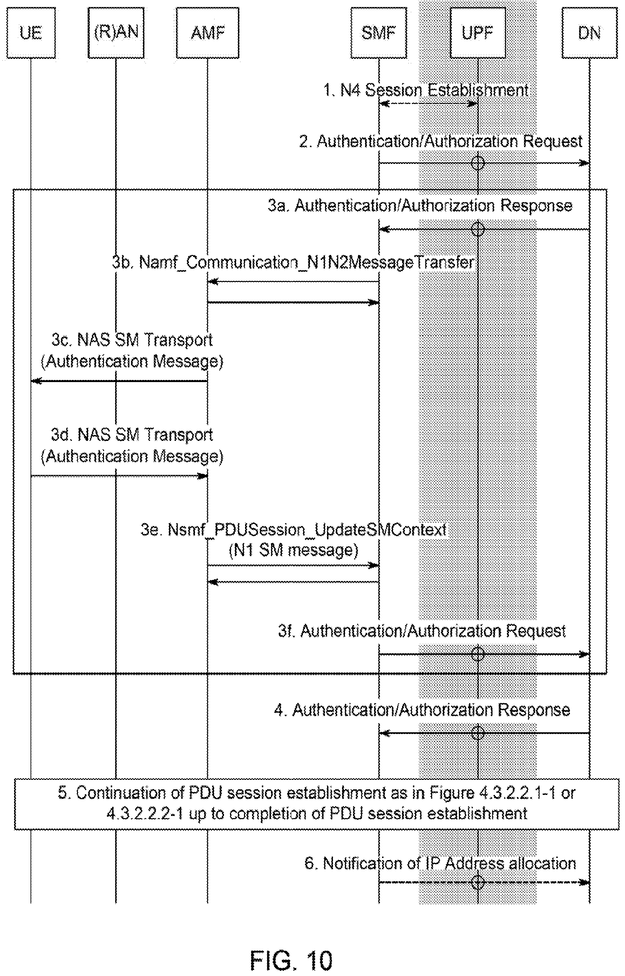

The PDU Session establishment authentication/authorization is optionally triggered by the SMF during a PDU Session establishment and performed transparently via a UPF or directly with the DN-AAA server without involving the UPF if the DN-AAA server is located in the 5GC and reachable directly. Figure 10 is copied from reference [6], which depicts a procedure for authentication/authorization by a DN-AAA server during PDU Session Establishment.

### PDU Session Establishment and Modification

**UE-requested PDU Session establishment in the non-roaming and roaming with local breakout.**

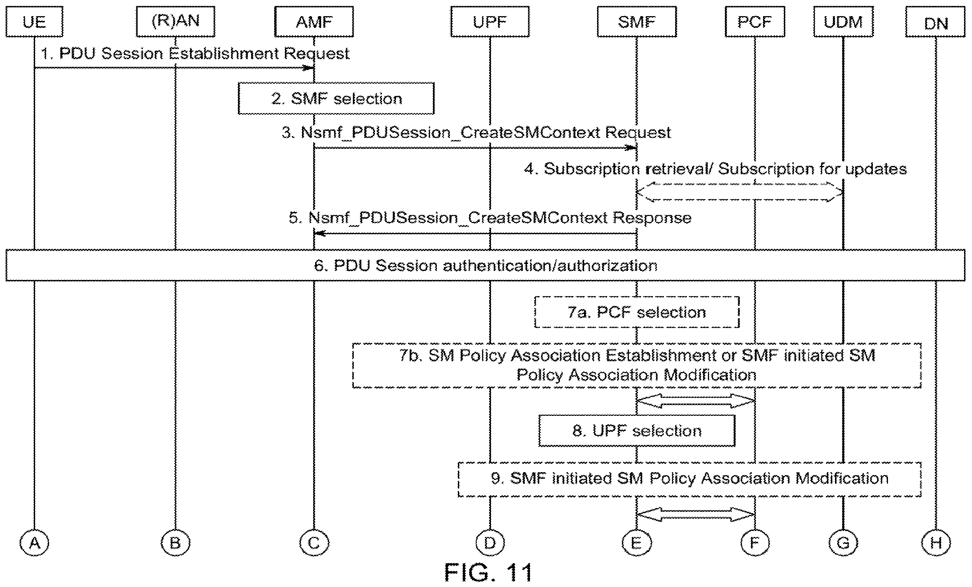

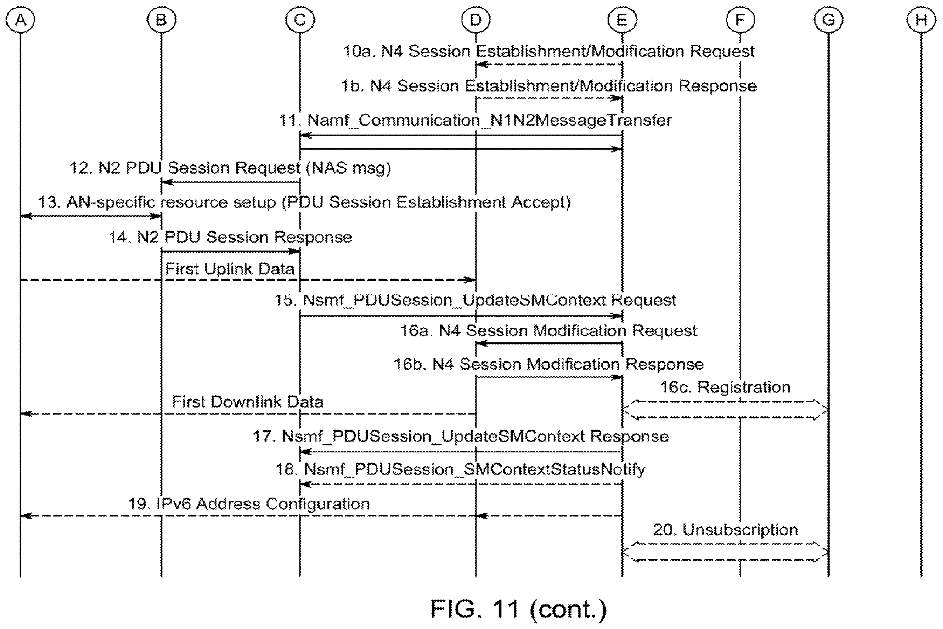

Figure 11 is copied from reference [6] which exhibits PDU Session establishment process in the non-roaming and roaming with local breakout cases. The procedure is used by a UE to establish a new PDU Session.

### UE or network requested PDU Session Modification (non-roaming and roaming with local breakout)

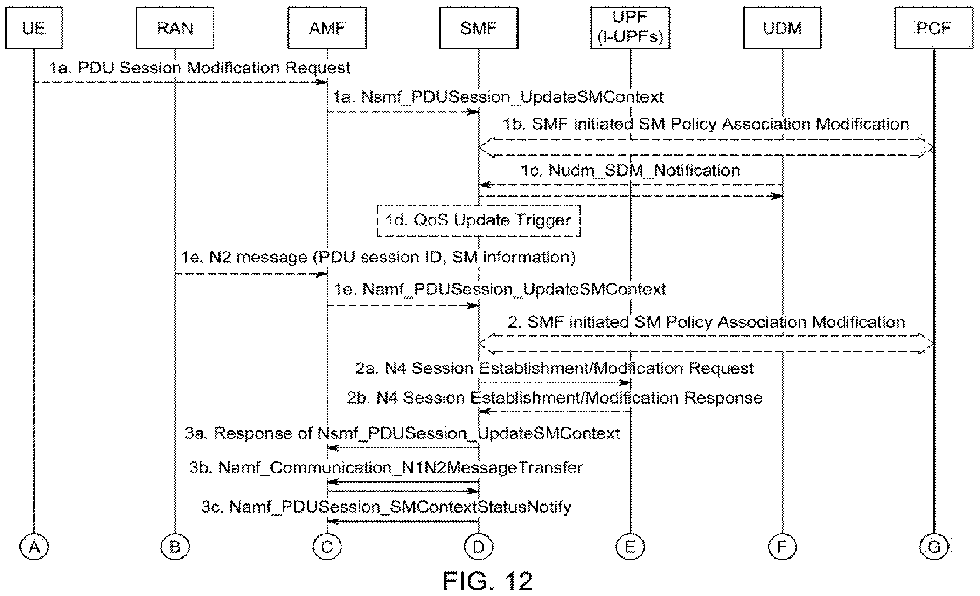

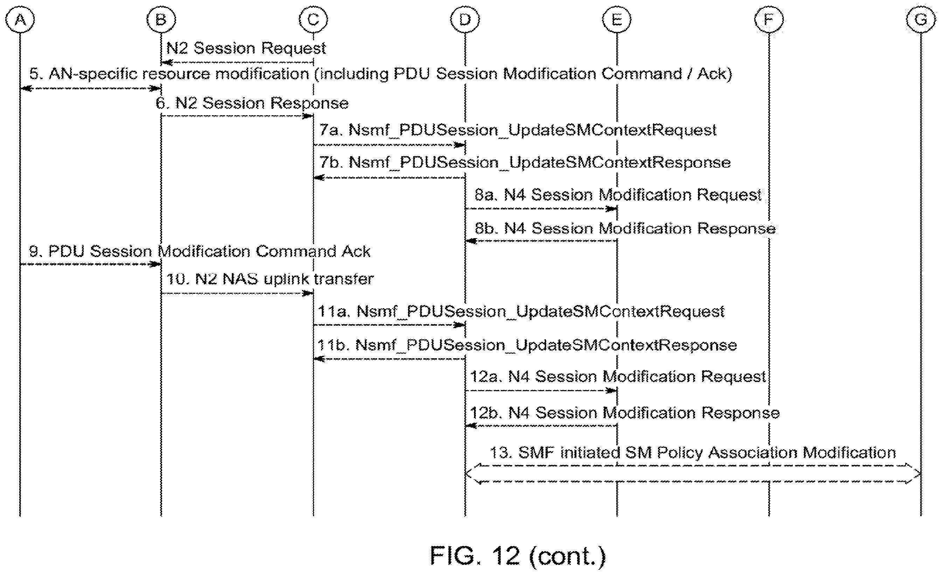

The UE or network requested PDU Session Modification procedure (non-roaming and roaming with local breakout scenario) is depicted in Figure 12. Figure 12 is copied from reference [6].

The procedure is used by a UE or by the Network to modify a PDU Session**.QoS**

### QoS Flow

The QoS Flow is the finest granularity of QoS differentiation in a PDU Session. A QoS Flow ID (QFI) is used to identify a QoS Flow in the 5G System. User Plane traffic with the same QFI within a PDU Session receive the same traffic forwarding treatment (e.g. scheduling, admission threshold). Within the 5GS, a QoS Flow is controlled by the SMF and may be preconfigured or established via the PDU Session Establishment procedure.

Any QoS Flow is characterized by:
- A QoS profile provided by the SMF to the AN via the AMF over the N2 reference point or preconfigured in the AN;
- One or more QoS rule(s) and optionally, QoS Flow level QoS parameters associated with these QoS rule(s) which can be provided by the SMF to the UE via the AMF over the N1 reference point and/or derived by the UE by applying Reflective QoS control; and
- One or more UL and DL PDR(s) provided by the SMF to the UPF.

### QoS Profile

For each QoS Flow, the QoS profile shall include the QoS parameters:
- 5G QoS Identifier (5QI); and
- Allocation and Retention Priority (ARP).

For each Non-GBR QoS Flow only, the QoS profile may also include the QoS parameter:
- Reflective QoS Attribute (RQA).

For each GBR QoS Flow only, the QoS profile shall also include the QoS parameters:
- Guaranteed Flow Bit Rate (GFBR) - UL and DL; and
- Maximum Flow Bit Rate (MFBR) - UL and DL; and
- In the case of a GBR QoS Flow only, the QoS profile may also include one or more of the QoS parameters:
- Notification control;
- Maximum Packet Loss Rate - UL and DL.

Each QoS profile has one corresponding QoS Flow identifier (QFI) which is not included in the QoS profile itself.

### QoS Rules

### Signalled QoS Rules

The UE performs the classification and marking of UL User plane traffic, i.e. the association of UL traffic to QoS Flows, based on QoS rules. QoS rules may be explicitly provided to the UE (i.e. explicitly signaled QoS rules using the PDU Session Establishment/Modification procedure), pre-configured in the UE or implicitly derived by the UE by applying Reflective QoS.
A QoS rule contains:
a) an indication of whether the QoS rule is the default QoS rule;
b) a QoS Flow Identifier (QFI) of the associated QoS Flow;
c) a QoS rule identifier (QRI);
d) an optional Packet Filter Set; and
e) a precedence value.

An explicitly signaled QoS rule contains a QoS rule identifier which is unique within the PDU Session and is generated by SMF. There can be more than one QoS rule associated with the same QoS Flow, i.e. with the same QFI.

A default QoS rule is required to be sent to the UE for every PDU Session establishment and it is associated with a QoS Flow.

For Unstructured type PDU Session, the default QoS rule does not contain a Packet Filter Set, and in this case the default QoS rule defines the treatment of all packets in the PDU Session.

### Derived QoS Rules

Derived QoS rules are applicable only for PDU session of IPv4, IPv6, IPv4v6 or Ethernet PDU session type.

The reflective QoS in the UE creates derived QoS rules associated with a PDU session based on DL user data packets received via the PDU session.

Each derived QoS rule contains:
a) a QoS flow identifier (QFI);
b) a packet filter for UL direction; and
c) a precedence value of 80 (decimal).
NOTE: On the network side, the corresponding QoS rule can be associated with a different precedence value in the range from 70 to 99 (decimal).

Within a PDU session:
a) there can be zero, one or more derived QoS rules associated with a given QFI; and
b) there can be up to one derived QoS rule associated with a given packet filter for UL direction.

When a QoS Rule is derived by the UE, the UE will start a timer (T3583) and delete the rule when the timer expires. The UE will then be triggered to create a new rule the next time it received a DL packet for which it does not have a rule.

### Structure of QoS Rules

The purpose of the QoS rules information element is to indicate a set of QoS rules to be used by the UE, where each QoS rule is a set of parameters as described in 3GPP TS 24.501 [11].

The QoS rules information element is a type 6 information element with a minimum length of 7 octets. The maximum length for the information element is 65538 octets.

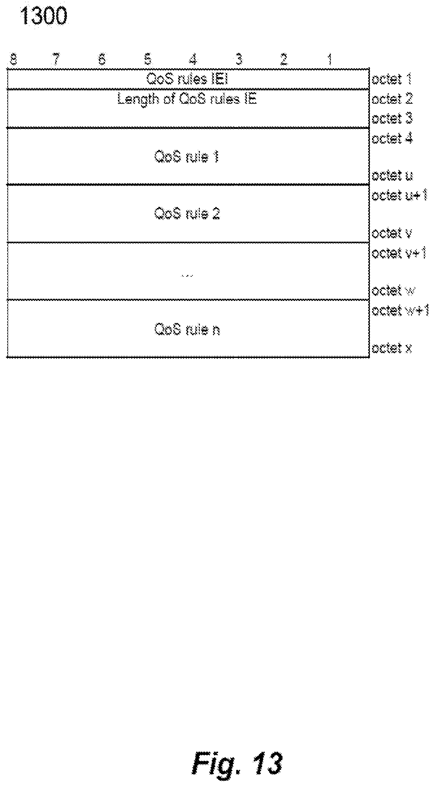

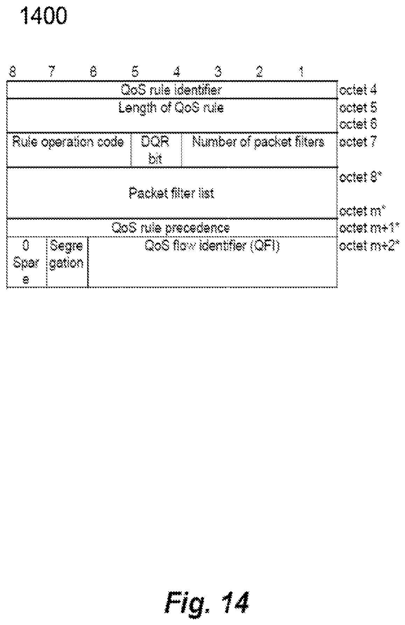

The QoS rules information element 1300 is coded as shown in Figure 13 and QoS rule 1400 is shown in Figure 14 below:

### QoS Flow Mapping

The SMF assigns the QFI for a new QoS Flow and derives its QoS profile, corresponding UPF instructions and QoS Rule(s) from the PCC rules and other information provided by the PCF.

For each SDF, when applicable, the SMF generates an explicitly signaled QoS rule according to the following principles and provides it to the UE together with an add operation:
- A unique (for the PDU Session) QoS rule identifier is assigned;
- The QFI in the QoS rule is set to the QFI of the QoS Flow to which the PCC rule is bound;
- The Packet Filter Set of the QoS rule is generated from the UL SDF filters and optionally the DL SDF filters of the PCC rule (but only from those SDF filters that have an indication for being signaled to the UE);
- The QoS rule precedence value is set to the precedence value of the PCC rule for which the QoS rule is generated;
- for a dynamically assigned QFI, the QoS Flow level QoS parameters (e.g. 5QI, GFBR, MFBR, Averaging Window, see TS 24.501 [11]) are signaled to UE in addition to the QoS rule(s) associated to the QoS Flow.

In UL:
- For a PDU Session of Type IP or Ethernet, the UE evaluates UL packets against the UL Packet Filters in the Packet Filter Set in the QoS rules based on the precedence value of QoS rules in increasing order until a matching QoS rule (i.e. whose Packet Filter matches the UL packet) is found.
- If no matching QoS rule is found, the UE shall discard the UL data packet.
- For a PDU Session of Type Unstructured, the default QoS rule does not contain a Packet Filter Set and allows all UL packets.
- The UE uses the QFI in the corresponding matching QoS rule to bind the UL packet to a QoS Flow.
- UE uses the stored QoS rules to determine mapping between UL User Plane traffic and QoS Flows.
- UE marks the UL PDU with the QFI of the QoS rule containing the matching Packet Filter and transmits the UL PDUs using the corresponding access specific resource for the QoS Flow based on the mapping provided by (R)AN.

### Problem Statement

Reference [1], 3GPP TR 22.904, describes use cases where it would be advantageous for the 3GPP System to identify the user of a UE.

One use case from reference [1] describes a scenario where two children, Lucy and Linus, sometimes use their mother's UE. It is desirable to enhance the 3GPP System so that the network can recognize when Lucy or Linus is using the UE so that the network provide the UE with different services depending on who is using the UE. For example, the network may provide web filtering when Lucy or Linus is using the UE. Furthermore, the network may apply different time restrictions for each user. This scenario implies that the network maintains a profile for each user and that the profile includes information about what UE(s) (i.e. subscription(s)) the user may use to access the network and what services each user is allowed to access. It further implies that each user may use different applications or services (e.g. gaming, video streaming etc.) in the device that may demand or require different QoS, different users may desire different user experiences, or different users may be entitled to different user experiences based on their agreement with the MNO.

The use case describes above makes it clear that the network should consider who is using the UE when granting access to services, including network slices.

Furthermore, based on the scenario discussed, reference [1] suggests that 3GPP system shall be able to save user specific service settings and parameters such as QoS parameters with User ID for the user.

URSP rules are used to configure the UE with information about what network slice and PDU Session and data network should be used for a given type of application traffic. One of the problems that will be addressed in this disclosure is how URSP rules can be enhanced to consider, or factor in, the User of the UE. Furthermore, the disclosure will address how and when the UE's URSP rules are updated based on who is using, or may use, the UE.

Returning to the use case that was described earlier in this section, it is also clear that the person who is using the UE may change dynamically. For example, the Lucy may place a handset on the table when she is done surfing the web and Linus may later pick the device up and begin gaming. This scenario makes it clear that the network needs to be able to detect when there is a change of user and the user of a UE needs to be able to deactivate and suspend, i.e. temporarily deactivate, his account on a UE. When there is a change of user, the network also needs to be able to change what services the UE can access. In terms of what services the UE can access when there is a change of user, this disclosure will explore how the change impacts the UE's configured and allowed NSSAI.

In the use case described earlier, Lucy and Linus may use a different user account and User IDs. Hence, Lucy and Linus may log into different user accounts and initiate different applications that may have different QoS requirements. It should also be noted that users may subscribe for custom QoS and compensate the MNO for the services subscribed. For each user to experience the appropriate quality of service in a UE, QoS Rules must be linked or stored with User's ID, perhaps in the user's profile and sent to the UE. Therefore, the network needs to be able to configure QoS Rules in the UE such that the UE can associate some rules

In a scenario where the network is "user aware", it may be the case that the network determines that a user is no longer allowed to access the network from the UE. For example, this may occur if Lucy and Linus' mother calls the network operator and terminates, or changes, their permissions such that they are only allowed to use the UE at certain locations, times of day, etc. In such a scenario, the network needs to be able to deactivate or suspend, i.e. temporarily deactivate, a user's account on a UE.

As discussed earlier in this document, User IDs may have inconsistent sizes. Transmitting longer names constantly over the air may increases the amount of over-the-air signaling resources. Thus, it may be desirable to represent User IDs with a consistent size IE for optimal computing.

### Summary

In Rel-17, 3GPP is studying how to enhance the 5G system to be aware of what user data plane traffic is associated with. This disclosure focuses on following aspects:
- how the network configures a UE with policies or routes that are used to route data based on what user (i.e. capillary device, application, or human) generated the traffic.
- enhancement of QoS Rules IE based on user/User ID; and delivery of the resulting user specific QoS Rules to the UE.

The disclosure outlines how the UE can detect certain events that cause it to request that the network authenticate a user and that the network link a user with the UE's subscription. This may result in the network providing the UE with an updated Configured NSSAI. Where each S-NSSAI in the updated Configured NSSAI is associated with one or more user identifiers.

The disclosure further describes how, once a user is linked with a UE's subscription, the UE may determine to send a new Requested NSSAI and receive a new Allowed NSSAI where the S-NSSAI(s) in the new Requested NSSAI and Allowed NSSAI are associated with User Identifiers.

Once the UE is connected to network slices that can be accessed by the user(s) that are associated with the UE, the UE will need to determine what traffic should be routed to each slice. The disclosure also describes how the network can provide the UE with URSP policies that are associated with User Identities so that the UE can apply different policies based on the User who is responsible for the traffic. Specifically, the disclosure proposes an efficient way of associating User Id(s) with policy information. User Identities may be associated with PSIs so that the format and content of the PSI and URSP policy can be left largely unchanged and that changes in User activity, association, or linking will not result in the network needing to send the UE new PSIs. The disclosure also describes what events would cause the UE to request updated PSI / User Association information from the network.

Furthermore, this disclosure describes new User Centric QoS Rules (UCQRs), how the UCQRs can be encoded into NAS information elements, describes what procedures can be enhanced to deliver the new information elements to the UE, and describes how the UE can associate user traffic with the User Centric QoS Rules.

The disclosure describes how User ID aliases can be assigned by the network, provided to the UE, and used in subsequent message exchanges between the UE and Network in order to reduce information element sizes.

### Detailed Description

This disclosure focuses on how the network detects that a new User is associated with a UE (or no longer associated with a UE), how the network re-configures the UE to know what services are available to it when there is a change of user association, and how the UE request that the network allow it to access services when users are associated it.

Section 1 describes how the UE's Configured NSSAI is impacted when user's log on and off the UE and when users are linked and unlinked with the UE.

Section 2 describes how the UE's Allowed NSSAI may be updated when users log on and off of the UE and when users are linked and unlinked with the UE.

Section 3 describes how URSP Rules, or information that is associated with URSP rules, may be updated to consider which user generated the traffic that is causing the URSP rules to be evaluated.

Section 4 describes the structure of proposed User Centric QoS Rules (UCQRs) and new information element that can be used to send User Centric QoS Rules to the UE.

Section 5 describes various 3GPP procedures such as PDU session establishment, within which UCQRs are delivered to the UE.

### 1. Handling of the Configured NSSAI During User Events

The set of services (i.e. slices) that a UE can access in a PLMN is called the Configured NSSAI. The Configured NSSAI is provided to the UE during the Registration and Configuration Update Procedures. When the 3GPP System is enhanced to be "User-Aware", it may be necessary for the 3GPP System to modify the UE's Configured NSSAI based on which user is using the UE or which users may use the UE.

It is anticipated that the 5GC will maintain a user profile for the various users that it may be aware of. User profiles may be linked with subscriptions. The linking operation may be based on an event in the network such as an administrator or a third party updating a user profile or subscription. The fact that a user profile is linked with a subscription is an indication in the 5GC that the user may access the system using the UE that is associated with the subscription. When a user profile becomes linked with a subscription, the network may send the UE a Configuration Update message as described above. The Configuration Update message may be enhanced to indicate to the UE that the User is linked to the subscription. Furthermore, the Configuration Update message may include a Configured NSSAI that has been updated based on what users are linked to the subscription. For example, a separate Configured NSSAI may be provided for each user, a Configured NSSAI may be provided for traffic that is associated with no user, a Configured NSSAI may be provided for traffic that is associated with all users or a single Configured NSSAI may be provided and User Identitie(s) may be associated with each S-NSSAI within the Configured NSSAI.

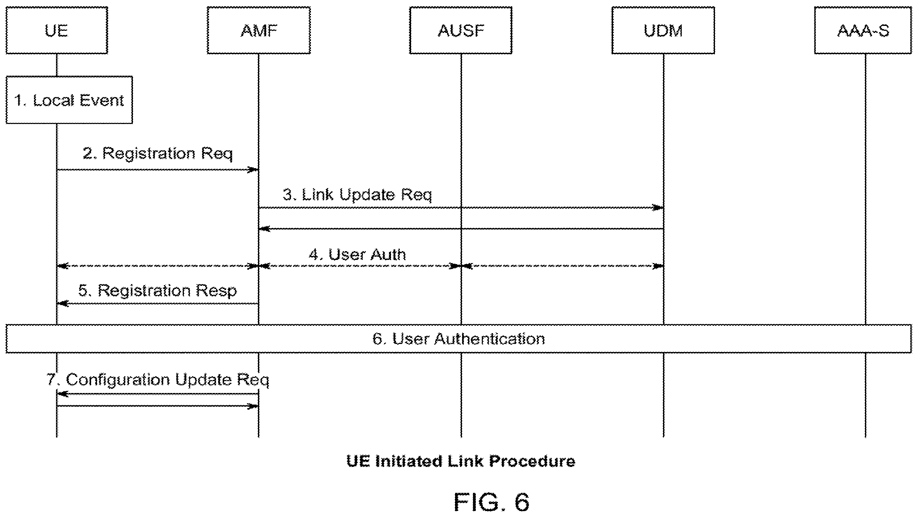

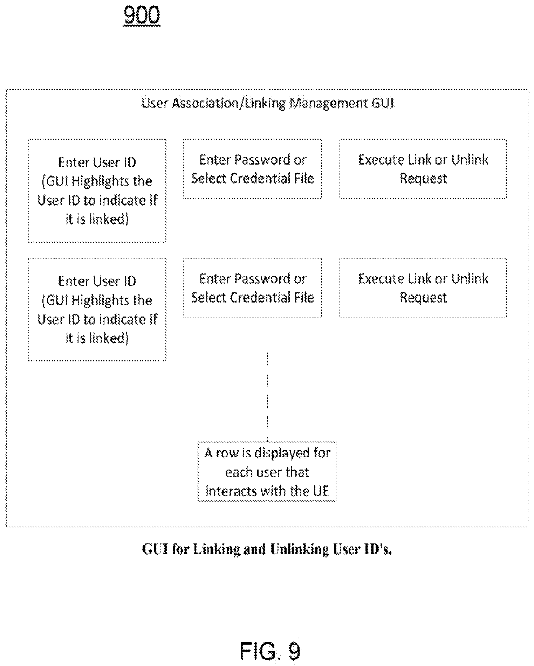

In some cases, the linking operation may be based on an event that is local to the UE. For example, a user may access a GUI on the UE and request to link with the UE's subscription. The user's invocation of the GUI may trigger the UE to send a request to the network and the request may trigger an authentication procedure where the user is authenticated. The request may be a NAS request such as a Registration Update message that includes the User Identity. The Registration Update message may trigger a separate, EAP based, authentication procedure where the user is authenticated. The EAP authentication procedure may interact with the GUI. For example, the EAP authentication procedure may result in a GUI requesting and receiving a password or other verification information. An example of the GUI is shown in Figure 9 and discussed below. If the user is successfully authenticated, then the network may send a UE Configuration Update (UCU) message to the UE. The UCU message may include an indication that the User has been authenticated and a Configured NSSAI that has been updated based on the fact that the user is now linked with the subscription. The UCU message may also provide the UE with a new Allowed NSSAI. The format of the allowed NSSAI may be enhanced to allow the network to indicate to the UE which user(s) are allowed to access each S-NSSAI with the allowed NSSAI. This procedure is shown in step 7 of Figure 6.

The procedure of Figure 6 shows how a UE may indicate to the network that a user is now associated with the UE. The procedure may similarly be used by the UE to indicate to the network that the user is no longer logged into the UE. Of course, the authentication procedure may be skipped, but the event may still result in the network updating the UE's Configured and/or Allowed NSSAI. The indication from the UE to the network may indicate that the user should be unlinked from the UE's subscription or it may indicate to the network that the user is no longer present, but the user's profile may remain linked with the UE's subscription. Whether the UE indicates that the user should remain linked to the subscription or not may depend on the input from the GUI. For example, the GUI may be used to indicate to the UE that the user no longer wishes to be associated with the UE or that the user no longer wishes to be associated with the subscription (i.e. unlinked). If the UE indicates that the user should no longer be associated with the UE or that the user is no longer linked with the subscription, the network may provide the UE with a new Configured NSSAI which will be updated to account for the fact that the user is no longer using the UE or linked with the UE's subscription.

The procedure of Figure 6 shows how a UE may request that the network associates a User Identifier with the UE, resulting in the network sending the UE a new Configured NSSAI. The new Configured NSSAI includes S-NSSAI's that were not previously in the UE's NSSAI due to the user now being linked to the UE's subscription. The new Configured NSSAI may also no longer include certain S-NSSAI's that were previously in the UE's NSSAI due to the user now being linked to the UE's subscription.
1. At step 1 of Fig. 6, a local event on the UE causes the UE to determine that a new user needs to be associated with the UE. Examples of local events include a person entering a new username in a GUI (i.e. a web browser, application, etc.) and the UE receiving a User Identity from another device after the other device pairs, connects, or communicates with the UE via Bluetooth or Wi-Fi. The event may also involve the UE receiving a password, or credential, with the user identifier. The UE may derive the User ID and associated credentials that will be sent to the 3GPP System based on the entered or received information.
2. At step 2 of Fig. 6, the UE sends a Registration Update Request to the AMF to indicate that it desires to associate the User Identifier with the UE's subscription. The request includes the User ID.
3. At step 3 of Fig. 6, the UE sends a link update request to the UDM. The request indicates the SUPI of the UE and the User ID of the user. The UDM access the UDR, which is the repository where the UE's subscription is stored and the repository where the User's profile is stored. If the UE's subscription and User's profile information indicates that linking is permitted, the UDM will respond to the UE that the User ID may be linked with the UE's subscription.
4. Optionally, at step 4 of Fig. 6, the AUSF may perform an authentication procedure with the UE in order to authenticate the user. Messages between the AUSF and UE are sent to and from the UE's NAS layer via the AMF. The authentication procedure may involve the UE sending the password, or a hash of the password, that was received via the GUI in step 1 to the AUSF.
5. At step 5 of Fig. 6, the AMF sends a Registration Response to the UE.
   a. If the authentication procedure of step 4 was performed, the response indicates to the UE whether the User ID has been linked to the UE's Subscription. If the response indicates that the User ID was not linked, then the response includes a cause code that indicates a failure cause (e.g. authentication failure or unrecognized User ID or Linking not Permitted by User or Linking not Permitted by Subscriber). If linking was successful, the Registration Response may include a new Configured NSSAI. The new Configured NSSAI may include S-NSSAI that may be associated with the User Id. The flow stops here.
   b. If the authentication procedure of step 4 was not performed, the response indicates to the UE that authorization of the User ID linking to the UE's Subscription is pending. The flow continues to step 6
6. At step 6 of Fig. 6, the the UE executes an authentication procedure with the network. The procedure may be EAP based and may be similar to the Network Slice-Specific Authentication and Authorization procedures that was described above. The authentication procedure may involve the UE sending the password, or a hash of the password, that was received via the GUI in step 1 to the network or it may involve the UE prompting the user to enter a password.
7. At step 7 of Fig. 6, the AMF sends a Configuration Update Request to the UE, the message includes a new Configured NSSAI. The new Configured NSSAI may include S-NSSAI that may be associated with the User Id. The UE responds to the Configuration Update with an indication if it was successful.

Note that the procedure that is described in Figure 6 involves the UE's NAS layer sending a Registration Request to the Network. Alternatively, other NAS messages may be used to send the request to network.

### 2. Handling of the Allowed NSSAI

Once a user successfully authenticates with the network, the UE may request to be allowed to access different NSSAI's. Successful user authentication or reception of a Configured NSSAI that has been updated with new User ID's may trigger the UE to send a Registration Update message. The Registration Update message may provide the network with a Requested NSSAI that has been updated based on the User ID. The format of the Requested NSSAI may be updated to allow the UE to indicate to the network what user(s) would like to be allowed to access each S-NSSAI. The network may use the users' profiles to check which S-NSSAI's they should be allowed to access and use this information to send an Allowed NSSAI to the UE. The format of the Allowed NSSAI may indicate to the UE which user is allowed to access each S-NSSAI. This procedure is shown in Figure 7.
1. At step 1 of Fig. 7, a local event on the UE causes the UE to determine that it should send a new Requested NSSAI to the network. An example of a local event includes the completion of the procedure of Figure 6; that is, reception of a new Configured NSSAI that is associated with User ID. Other examples of local events include a different user unlocking the UE, logging in onto the UE, generating application traffic, another device after the other device pairs, connects, or communicates with the UE via Bluetooth or Wi-Fi.
2. At step 2 of Fig. 7, the UE sends a Registration Update Request to the network. The request includes a Requested NSSAI that has been updated to indicate whether each S-NSSAI in the NSSAI is associated with one or more User Id(s) and further indicate which User Id(s) are associated with each S-NSSAI. The UE may indicate that some S-NSSAI's are associated with no particular User Id(s) and instead just associated with the subscription. When no User Id(s) are indicated to be associated with an S-NSSAI, the network may interpret this indication that the UE desires the S-NSSAI to be associated only with the UE's subscription.
3. At step 3 of Fig. 7, the AMF queries the UE's Subscription and the profiles of the user(s) that were indicated in step 1, to determine which S-NSSAI(s) the UE may be allowed to access. This step may consist of multiple queries; for example, a UDM query to obtain the UE's subscribed S-NSSAI's where the data key is the UE's SUPI and a UDM query to obtain the user's subscribed S-NSSAI's where the data key is the User's Id.
4. At step 4 of Fig. 7, the AMF responds to the UE with an allowed NSSAI. The message further indicates to the UE if each S-NSSAI may be associated with user(s) that are linked with the UE's subscription. For example, the message may provide a list of User Id(s) that may access each S-NSSAI from the UE. The message may also provide a list of User Id(s) that are barred from access each S-NSSAI from the UE. The message may also indicate that certain S-NSSAI's may only be associated with the UE's subscription or associated with any user. Note that the consequence of indicating that an S-NSSAI may only be associated with the UE's subscription is that traffic that is exchanged between the UE and the associated slice will be charged to the UE's subscription and a user.

### 3. Handling of Application Traffic

As described above, when an application generates traffic the UE will compare the traffic against Traffic Descriptors in URSP rules in order to determine which URSP rule should be associated with the traffic. When a matching rule is found, the UE will further evaluate the RSD of the rule in order to determine what route (e.g. DNN and S-NSSAI) the traffic should take.

The Traffic Descriptor in the URSP rule could be updated to include a User Id(s) field. The UE could then use this new field to recognize that the rule only applies to traffic that is generated by one of the User Id(s) that is indicated in the User Id(s) field. If no User ID is associated with the URSP rule, the UE may then interpret the rule as applying only to traffic that is associated with no user. However, this approach may complicate the UE's evaluation of URSP rules. Complications may arise when the user generates traffic that matches no URSP rule. When this scenario arises, the match-all URSP rule would normally apply to the traffic. However, some of RSD's in the match-all URSP rule might include slices that are allowed to be accessed by the UE, but not the associated user. Thus, the UE would need to check whether the route is a valid choice for the user.

Another approach to handling the provisioning and evaluation of URSP rules is enhancing the system to allow the network to provision distinct sets of URSP rules to be associated with each user and set of URSP rules that may be associated with the UE (i.e. no particular user). However, the disadvantage of this approach is that the network may need to send more data and signaling towards the device (e.g. the URSP rules that are used by some users and the UE may be very similar or identical).

Another approach that might somewhat reduce the amount of data and signaling that is required between the UE and the network is that the network can provide 2 sets of URSP rules to the UE. One set may be associated with no particular user and the second set may include user identifiers. However, this approach still suffers from the fact that some of RSD's in the match-all URSP rule might include slices that are allowed to be accessed by one user, but not the user that generated the traffic that is under evaluation. Thus, the UE would need to check whether the route is a valid choice for the user.

The format of the RSD could also be updated to include the User ID, but this would also complicate URSP evaluation in the sense that the UE might detect that traffic matches the URSP rule only to find that none of the routes can be applied to the user. The UE would then have to check other URSP rules until a match is found and current URSP evaluation rules would dictate the match-all rule cannot be applied.

A preferred approach may be to not modify the URSP rule to include User Id(s) and instead allow the network to indicate to the UE which User(s) are associated with each URSP rule. One advantage of this approach is that URSP rules would not need to be sent to the UE when a new user becomes associated with the UE and URSP rules would not need to be modified when a new user becomes associated with the UE. Instead, the network can simply tell the UE which user(s) are associated, or no longer associated, with each URSP rule. Thus, the amount of information that would need to be sent the UE would be less. Alternatively, the PSI's could be associated with User Identities. When the network provides a PSI to the UE, it may also indicate to the UE whether the PSI is associated with certain User ID(s) or the UE. When the UE indicates to the network (i.e. during Registration) which PSI's are installed on the UE, the UE may also indicate which User ID(s) it thinks are associated with each PSI. If the network indicates that the PSI is not associated with any User ID, then the UE may assume that the PSI is to be used for traffic that is not associated with any user. Alternatively, the PSI may be updated to include URSP Rules and User ID(s). The User ID(s) would be associated with all URSP rules in the PSI. NAS procedures may then be updated to allow the network to update which User ID(s) are contained in a PSI without updating the URSP rules that are contained in the PSI.

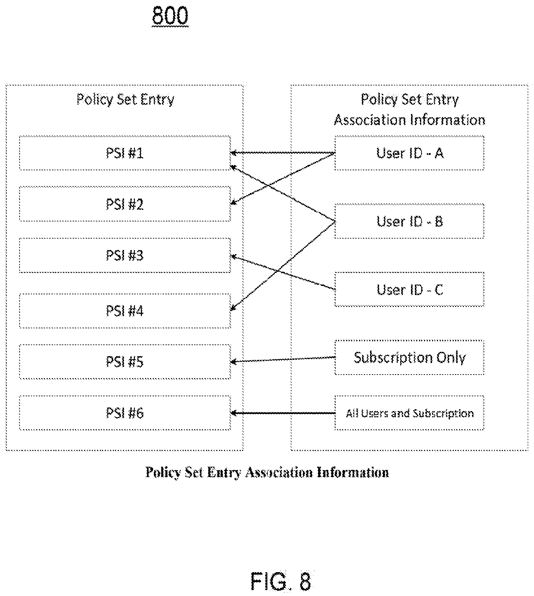

Figure 8 depicts a scenario 800 where the UE's policy set entry contains 6 PSI's and the UE is associated with 3 different users (users A, B and C). The policies within PSI #1 are used for traffic from users A and B. The policies within PSI #2 and PSI #3 are only used for traffic from user A. The policies within PSI #4 are only used for traffic from user B. The policies within PSI #5 are only used for traffic that is not associated with any user (i.e. traffic that will be charged to the subscription). The policies within PSI #6 may be applied to all traffic (i.e. all users and all traffic that is associated with the subscription).

The Policy Set Association Information may be sent to the UE by the network in the same NAS messages that are used to send PSIs to the UE (e.g. the Registration Response or any NAS message that includes a UE Policy Container or PSI). The network may send this information to the UE in order to install, or configure, the information on the UE.

The Policy Set Association Information may be sent from the UE to the Network in the same NAS messages that are used to send PSIs to the Network (e.g. the Registration Request or any NAS message that includes a UE Policy Container or PSI). The UE may send this information to the Network in order to inform the network what rules, or association information is installed or configured on the UE.

Note that when an ANDSP rule is associated with a User Identity, the UE may interpret the policy as only being active when the user is logged into the UE, associated with the UE, or generating traffic on the UE.

Section 1 described various events that might cause the network to update the UE's Configured NSSAI. These same events might cause the network to send the new, or updated PSIs, to the UE along with updated or new Policy Set Entry Association Information. The new, or updated, PSIs would include, or be associated with, User ID(s) so that the UE may know what URSP rules are associated with the User Id(s).

### 4. User Centric QoS Rules (UCQR)

QoS Rule identifiers (QRIs) may be part of a User's Profile, which links it with corresponding QoS Rules. The User Profile can be stored in the UDR. Alternatively, a user's QoS Rules could be stored in some other data base. User Centric QoS Rules may be sent to a UE. This section describes a new information element that can be used to send User Centric QoS Rules to the UE. The system may be triggered to send this new IE to the UE in procedures such as PDU Session Establishment, Registration, UE Configuration update, etc. Enhancements to these procedures are discussed later in the paper.

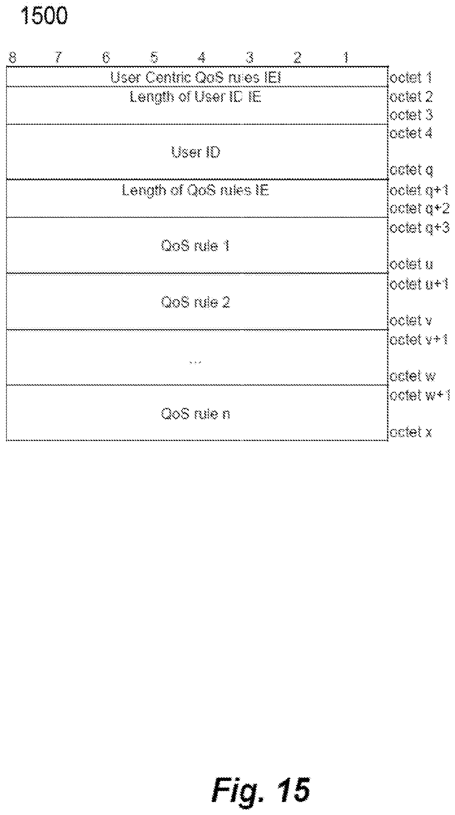

The QoS rules IE is described in TS 24.501 [11]. A new type of IE may be created for user centric QoS rules. The new IE may be based on the QoS rules IE. The new IE may be called User Centric QoS Rules (UCQRs). The structure or format of the UCQR IE (e.g., UCQR IE 1500) is shown in Figure 15.

Note in Figure 15, the UCQR IE includes a new IE called User ID. The format of a User ID may be an alpha numeric string and its length may vary. The Length of User ID IE maybe used to indicate to the UE how long the string is.

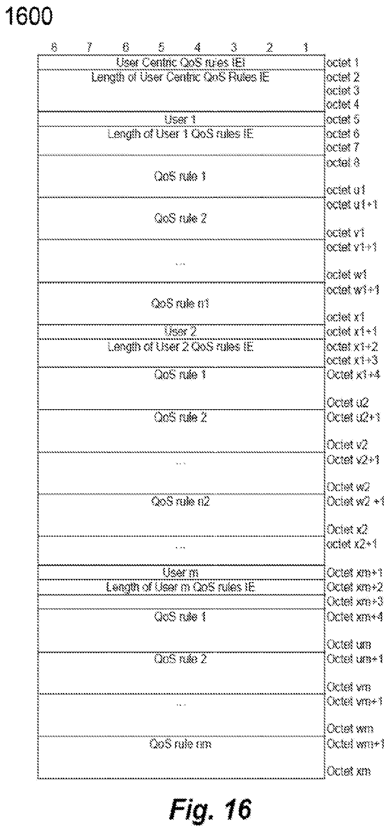

Figure 16 shows how the User Centric QoS rules IE (e.g., UCQR IE 1600) can be further enhanced to carry rules for multiple users. It shows corresponding UCQRs for User 1 through User m.

Alternatively, the length of a user ID may be of fixed length and may be represented within an octet. It should be appreciated that the UCRQ IE could be formatted such that multiple User ID IE's are included in it. So that QoS Rules that apply to multiple users can be provided to the UE in one IE.

Alternatively, instead of creating a new UCQR IE to provide user centric QoS rules to the UE, the format of the existing QoS rule IE may be enhanced to include User ID(s). Alternatively, a new type of User Centric QoS rules may be created to include User IDs and carried in the QoS rules IE.

Yet another alternative may be to enhance structure of QoS Rules IE in Figure 13 to provide mappings of User IDs to QoS Rules, possibly at the bottom of the QoS rules IE structure. This way only limited amount of changes to the existing formats may be attained.

The presence of User ID(s) in the QoS IE may be an indication to the UE that the set of QoS rules shall be applied to the traffic generated by the user with the corresponding User ID.

### 5. User Centric QoS Rules Delivery and Enforcement

This section describes various 3GPP procedures within which UCQRs may be delivered to the UE.

### UCQR Delivery During UE-Requested PDU Session Establishment Process

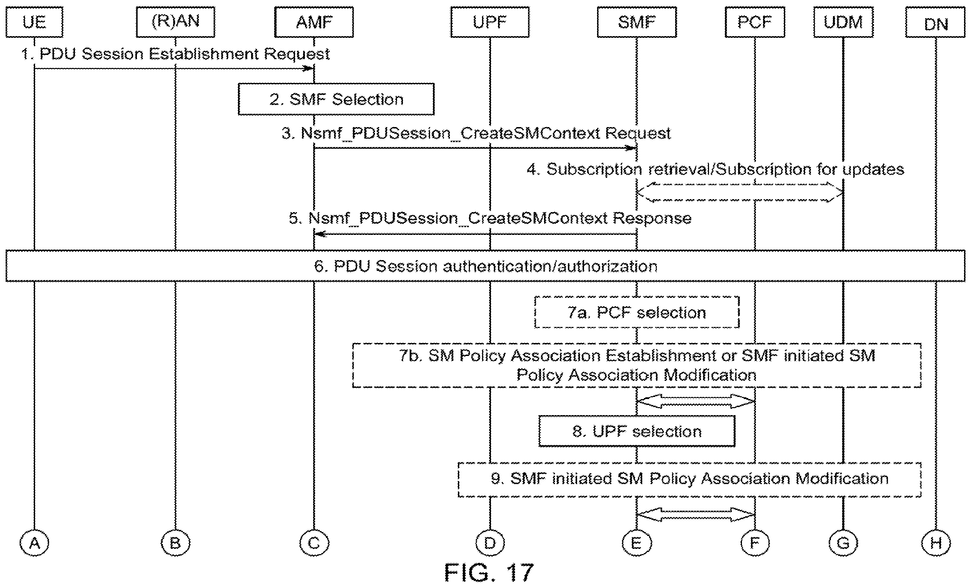

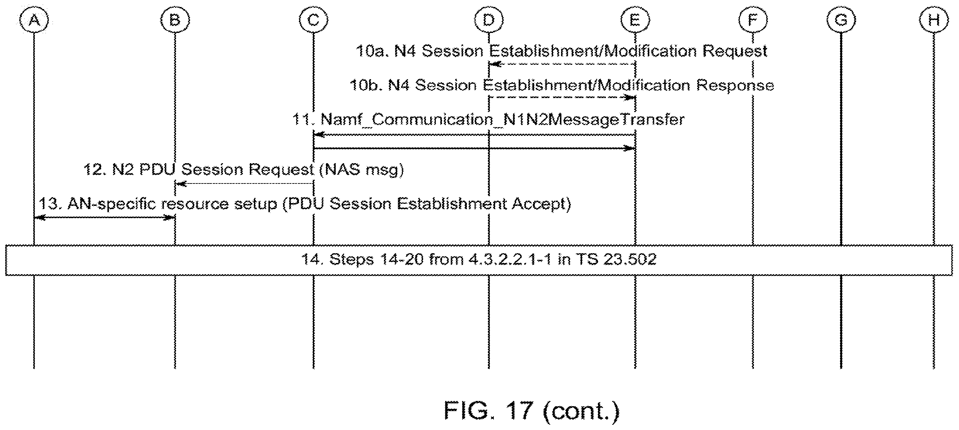

Figure 17 shows UE-requested PDU Session Establishment process.
1. Step 1 of Figure 17 - From UE to AMF: A user or application my trigger a NAS message for PDU session establishment with a User ID. The message from the UE to the Network includes a NAS Message (S-NSSAI(s), DNN, PDU Session ID, Request type, Old PDU Session ID, N1 SM container (PDU Session Establishment Request)). The message may be enhanced to include one or more User ID(s). The User ID(s) may be part of the NAS SM container (PDU Session Establishment Request). The presence of the User ID(s) may indicate to the network that the PDU Session will be used by the identified users. In case the UE does not provide any specific user ID in the request in the NAS message, the procedure may fall back to a PDU sessions establishment process described in TS 23.502 Rel 16 [6], where PDU session is with respect to a UE and the same QoS rules may be applied to all the users involved in a PDU session from the UE.
   Note that User ID may also be included in the SM PDU DN Request Container. User ID may be necessary for secondary authentication and authorization with a DN-AAA server.
2. Step 2 of Figure 17 - The AMF selects an appropriate SMF.
3. Step 3 of Figure 17 - From AMF to SMF: The AMF invokes either Nsmf_PDUSession_CreateSMContext Request or Nsmf_PDUSession_UpdateSMContext Request and includes the User ID(s) that were provided by the UE.
4. Step 4 of Figure 17 - If Session Management Ssubscription data for corresponding SUPI, DNN and S-NSSAI of the HPLMN is not available, then SMF retrieves the Session Management Subscription data. If User Profile information is not available for the identified user(s), the SMF retrieves the information from the UDR. The SMF may invoke Nudm_SDM_Get (SUPI, User ID, Session Management Subscription data, DNN, S-NSSAI of the HPLMN) and subscribes to be notified when this subscription data is modified using Nudm_ SDM Subscribe (SUPI, User ID, Session Management Subscription data, DNN, S-NSSAI of the HPLMN)..
   Note that a subscription may be linked to the user's profile as discussed in Section 5.2. Hence, in the process Nudm_SDM_Get, Nudm_SDM_Subscribe, Nudr_DM_Query, the SMF may request information from the User's Profile based on the User ID. The response may include the User Centric QoS Rule(s) obtained from the User's Profile and Subscription relation residing in the UDM/UDR.
   If the UE request is considered as not valid, the SMF decides to not accept to establish the PDU Session.
5. Step 5 of Figure 17 - From SMF to AMF: The SMF provides either Nsmf_PDUSession_CreateSMContext Response (Cause, SM Context ID or N1 SM container (PDU Session Reject (Cause))) or an Nsmf_PDUSession_UpdateSMContext Response depending on the request received in step 3.
   If the SMF received Nsmf_PDUSession_CreateSMContext Request in step 3 and the SMF is able to process the PDU Session establishment request, the SMF creates an SM context and responds to the AMF by providing an SM Context ID.
   This response may include UCQRs which were created by the SMF based on information that was retrieved from the user profile via UDM/UDR.
6. Step 6 of Figure 17 - Optional Secondary authentication/authorization. UCQRs may be delivered to the UE after Secondary authentication and authorization is complete. This process is described in section 5.5.4.
7a. Step 7a of Figure 17 - If dynamic PCC is to be used for the PDU Session, the SMF performs PCF selection as described in TS 23.501 [12], clause 6.3.7.1. If the Request Type indicates "Existing PDU Session" or "Existing Emergency PDU Session", the SMF shall use the PCF already selected for the PDU Session.
   Otherwise, the SMF may apply local policy.
7b. Step 7b of Figure 17 - The SMF may perform an SM Policy Association Establishment procedure to establish an SM Policy Association with the PCF and get the default PCC Rules for the PDU Session. The GPSI shall be included if available at SMF. If the Request Type in step 3 indicates "Existing PDU Session", the SMF may provide information on the Policy Control Request Trigger condition(s) that have been met by an SMF initiated SM Policy Association Modification procedure.
   The PCF may associate PCC Rules with the User Subscription and/or User Profile, which may include QoS Rule Identifier (QRI) for UCQRs belonging to the user. This may, optionally, allow PCC rules to be enforced for each user based on the UCQR.
   Alternatively, if the PDU session needs re-authentication/re-authorization, upon successful authentication and authorization, the SMF may request UDM for new UCQRs.
   Note: The purpose of step 7 is to receive PCC rules before selecting UPF. If PCC rules are not needed as input for UPF selection, step 7 can be performed after step 8.
8-10. Steps 8-10 in Figure 17 can correspond to 4.3.2.2.1-1 in TS 23.502 [6].
11. Step 11 of Figure 17 - SMF to AMF: The AMF invokes
   Namf_Communication _N1N2MessageTransfer.
   Namf_Communication_N1N2MessageTransfer may be enhanced to include User Centric QoS Rule(s). The User Centric QoS Rule(s) may be included in the PDU Session Establishment Accept message.
   The N2 SM information carries information that the AMF shall forward to the (R)AN.
   The N1 SM container contains the PDU Session Establishment Accept that the AMF shall provide to the UE
   Multiple User Centric QoS Rules, QoS Flow level QoS parameters if needed for the QoS Flow(s) associated with those User Centric QoS rule(s) and QoS Profiles may be included in the PDU Session Establishment Accept within the N1 SM and in the N2 SM information.
12. Step 12 of Figure 17 - AMF to (R)AN: N2 PDU Session Request (N2 SM information, NAS message (PDU Session ID, N1 SM container (PDU Session Establishment Accept)), [CN assisted RAN parameters tuning]).
   The AMF sends the NAS message containing PDU Session ID and PDU Session Establishment Accept targeted to the UE and the N2 SM information received from the SMF within the N2 PDU Session Request to the (R)AN.
13. Step 13 of Figure 17 - (R)AN to UE: The (R)AN may issue AN specific signalling exchange with the UE that is related with the information received from SMF.
   (R)AN forwards the NAS message (PDU Session ID, N1 SM container (PDU Session Establishment Accept)) provided in step 12 to the UE. (R)AN shall only provide the NAS message to the UE if the AN specific signalling exchange with the UE includes the (R)AN resource additions associated to the received N2 command.
   If the N2 SM information is not included in the step 11, the following steps 14 to 20 are omitted.
14. Steps 14 - 20 in Figure 17 are unchanged from Figure 12. Note that there may be situations where a user may trigger the UE to establish a PDU session with the core network and a second user may initiate data traffic from the UE, which may be sent via the same PDU session. Provided that the two users share a PDU session, this incident may trigger a PDU session modification process. A common case may be where a UE has established a PDU session which applies a UCQR and, when another user initiates data traffic to be sent from the existing PDU session, depending upon how UCQRs are defined according to Section 5.4, one of following may be delivered to the UE:
1. Same new UCQRs for both the users (UCQRs with User IDs of both the users)
2. New UCQR for second user only.
3. Different new UCQRs for each user.
4. Updated mapping of User IDs to QoS Rules via new UCQR IE.

### User Centric QoS Rules Delivery During PDU Session Modification Process

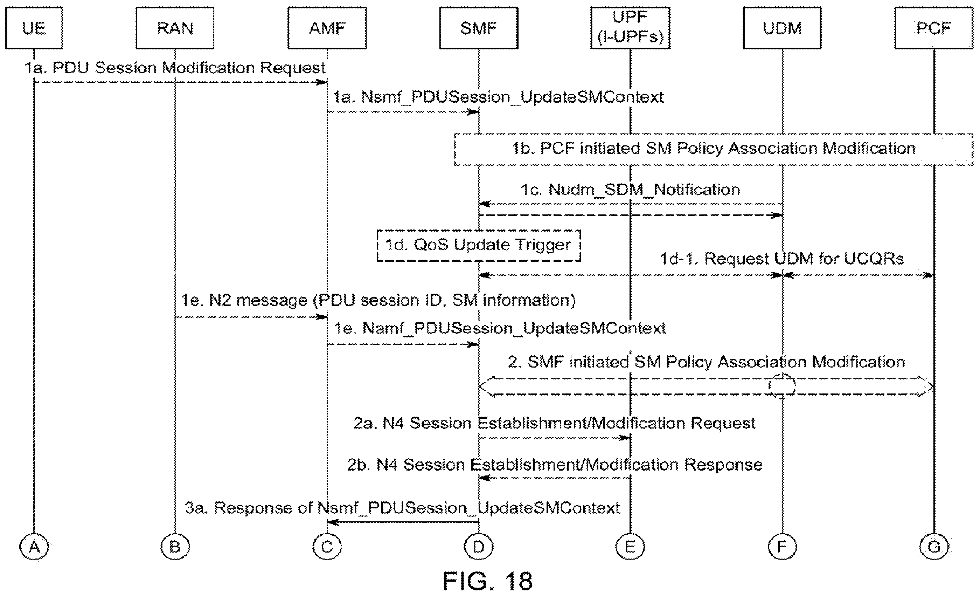

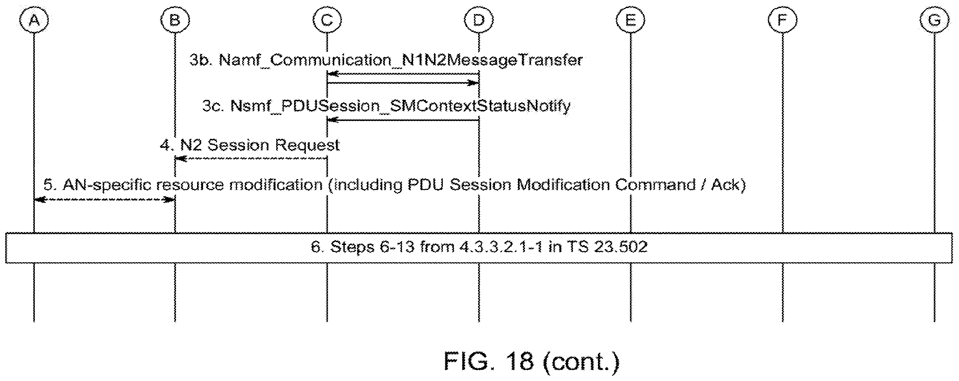

The UE or network requested PDU Session Modification procedure (non-roaming and roaming with local breakout scenario) is depicted in Figure 18.

Several occasions or conditions can trigger to Session Modification and hence, the delivery of new UCQRs to the UE. Some conditions may be:
- Change in user.
- Addition of user(s).
- New user joining an existing PDU session.
- Change in application.
   ∘ Addition of an application session in an existing PDU session.
   ∘ Ending an application session.
- Change in policy and charging due to modification of subscription (e.g., upgrading QoS for an application traffic)

1. The procedure may be triggered by following events:
   Step 1a of Figure 18. (Modification initiated by a User or an Application in the UE) A user or an application may initiate the PDU Session Modification procedure, wherein the message may be enhanced to include one or more User ID(s) in the transmission of an NAS message. The NAS message is forwarded by the (R)AN to the AMF with an indication of User location Information. The AMF invokes Nsmf_PDUSession_UpdateSMContext.

A user triggered PDU session modification procedure may initiate a user authentication procedure.

Step 1b of Figure 18. (SMF requested modification) The PCF performs a PCF initiated SM Policy Association Modification procedure to notify SMF about the modification of policies. This may have been triggered by a policy decision or upon AF requests, e.g. Application Function influence on traffic routing. This case may involve PCF referring to the UDM for user subscription and user profile information, where UCQRs for the user may be considered for PCC policies or its modification. In the PCF notification, PCF may include indication that the change in policies involves UCQRs needed in the modified PDU session to the SMF, the SMF may fetch new UCQRs from the UDM. Alternatively, PCF may trigger UDM to send UCQRs to the SMF.

Step 1c of Figure 18. (SMF requested modification) The UDM updates the subscription data of SMF by Nudm_ SDM Notification (SUPI, Session Management Subscription Data). This notification may be enhanced to include new UCQRs for the UE. The SMF updates the Session Management Subscription Data and acknowledges the UDM by returning an Ack with (SUPI).

Step 1d of Figure 18. (SMF requested modification) The SMF may decide to modify PDU Session. This procedure also may be triggered based on locally configured policy or triggered from the (R)AN. It may also be triggered if the UP connection is activated (as described in Service Request procedure) and the SMF has marked that the status of one or more QoS Flows are deleted in the 5GC but not synchronized with the UE yet.

Step 1d-1 of Figure 18. The PDU sessions modification may need to consider new QoS rules in the new PDU session. SMF may request UDM for new information from user subscription and user profile and simultaneously enforce PCC rules or vice versa for modified PDU session.

If the SMF receives one of the triggers in step 1b ~ 1d, the SMF starts SMF requested PDU Session Modification procedure.

Step 1e of Figure 18. (AN initiated modification) (R)AN shall indicate to the SMF when the AN resources onto which a QoS Flow is mapped are released irrespective of whether notification control is configured.

Step 2 of Figure 18. The SMF may need to report some subscribed event to the PCF by performing an SMF initiated SM Policy Association Modification procedure. This procedure may be enhanced with User ID and associating the corresponding subscription/profile information with the PCC rules, which may involve information exchange between PCF and the UDM. This step may be skipped if PDU Session Modification procedure is triggered by step 1b or 1d. If dynamic PCC is not deployed, the SMF may apply local policy to decide whether to change the QoS profile.

Step 2a of Figure 18. If redundant transmission has not been activated to the PDU session and the SMF decides to perform redundant transmission for the new QoS Flow, the SMF allocates an additional CN Tunnel Info if CN Tunnel Info is allocated by the SMF. The additional CN Tunnel Info is provided to the UPF via N4 Session Modification Request. The SMF also indicates to the UPF to perform packet duplication and elimination for the QoS Flow.

If redundant transmission has been activated on the PDU Session, and the SMF decides to stop redundant transmission, the SMF indicates to the UPF to release the CN Tunnel Info which is used as the redundancy tunnel of the PDU Session, and also indicates to the UPF to stop packet duplication and elimination for the corresponding QoS Flow(s).

Step 2b of Figure 18. The UPF responds to the SMF. If redundant transmission has not been activated to the PDU session and the SMF indicated to the UPF to perform packet duplication and elimination for the QoS Flow in step 2a, the UPF allocates an additional CN Tunnel Info if CN Tunnel Info is allocated by UPF. The additional CN Tunnel Info is provided to the SMF.

If redundant transmission has not been activated to the PDU Session and the SMF decides to perform redundant transmission for new QoS Flow with two I-UPFs in step 2a, the UPFs allocate CN Tunnel Info if CN Tunnel Info is allocated by UPF. The CN Tunnel Info of two I-UPFs is provided to the SMF.

Step 3a of Figure 18. For UE or AN initiated modification, the SMF responds to the AMF through Nsmf_PDUSession_UpdateSMContext, which includes User Centric QoS rule(s) in both N1 SM container and N2 SM information.

For signalled QoS, the new UCQRs may be delivered to the UE for modified PDU session. With AN initiated signalled QoS, SMF may request UDM/UDR for new UCQR for the modified PDU session.

The N2 SM information carries information that the AMF shall provide to the (R)AN. It may include the QoS profiles and the corresponding QFIs to notify the (R)AN that one or more QoS flows were added, or modified. It may include only QFI(s) to notify the (R)AN that one or more QoS flows were removed. The SMF may indicate for each QoS Flow whether redundant transmission shall be performed by a corresponding redundant transmission indicator. If the PDU Session Modification was triggered by the (R)AN Release in step 1e the N2 SM information carries an acknowledgement of the (R)AN Release. If the PDU Session Modification was requested by the UE for a PDU Session that has no established User Plane resources, the N2 SM information provided to the (R)AN includes information for establishment of User Plane resources.

The N1 SM container carries the PDU Session Modification Command that the AMF shall provide to the UE. It may include the User Centric QoS rules, Flow level QoS parameters if needed for the QoS Flow(s) associated with the UCQRs and corresponding QoS rule operation and QoS Flow level QoS parameters operation to notify the UE that one or more User Centric QoS rules were added, removed or modified.

Step 3b of Figure 18. For SMF requested modification, the SMF invokes Namf_Communication_N1N2MessageTransfer which includes N2 SM information and N1 SM container, enhanced with UCQRs.

For SMF requested modification, it may be assumed that SMF has already consulted with the UDM for user subscription and user profile for UCQRs, and hence, indicate new UCQRs in Namf_Communication_N1N2MessageTransfer message.

Step 3c of Figure 18. For SMF requested modification due to updated SMF-Associated parameters from the UDM, the SMF may provide the SMF derived CN assisted RAN parameters tuning to the AMF. In addition, SMF may be receive with new UCQRs from the UDM for corresponding user(s). The SMF invokes
Nsmf_PDUSession_SMContextStatusNotify (SMF derived CN assisted RAN parameters tuning) towards the AMF, which includes new UCQRs. The AMF stores the SMF derived CN assisted RAN parameters tuning in the associated PDU Session context for this UE.

Step 4 of Figure 18. The AMF may send N2 PDU Session Request (N2 SM information received from SMF, NAS message (PDU Session ID, N1 SM container (PDU Session Modification Command))) Message to the (R)AN. The PDU Session Modification Command may contain the new UCQRs for the UE.

Step 5 of Figure 18. The (R)AN may issue AN specific signalling exchange with the UE that is related with the information received from SMF. (R)AN may deliver UCQRs that it received from the SMF/UDM for the user to the UE as signalled QoS procedure.

Steps 6-13 can correspond to 4.3.3.2.1-1 in TS 23.502 [6]

### UCQRs Delivery During Network Slice-Specific Secondary Authentication Process

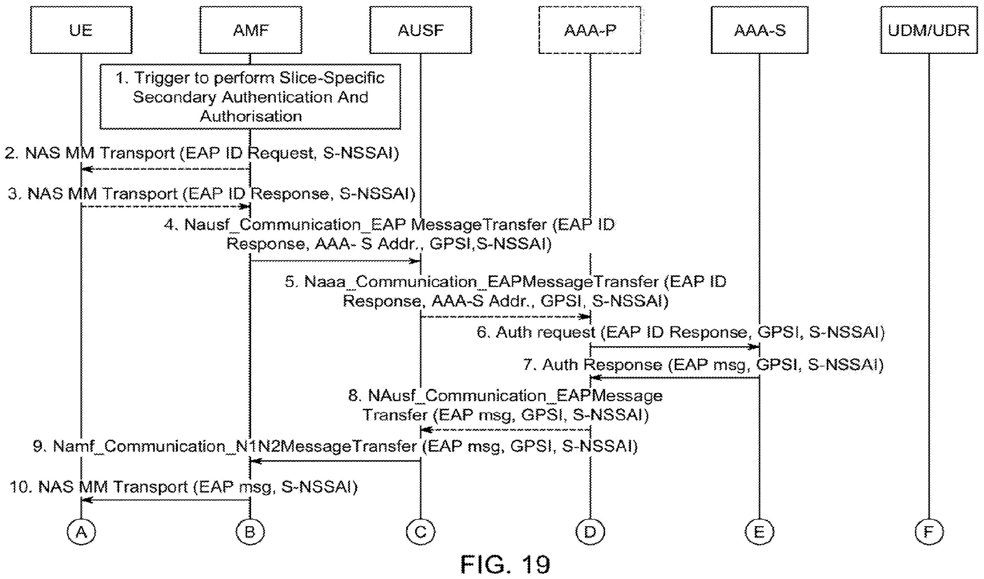

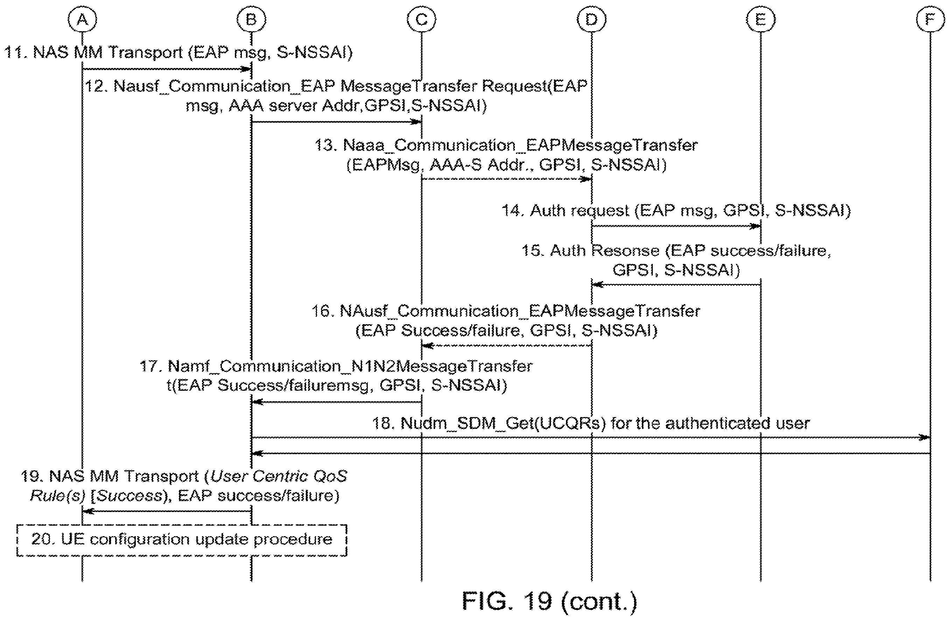

UCQRs may be delivered to the UE for an authenticating user during the process of Network Slice-Specific Authentication and Authorization (SSAA) once the user has been authenticated and authorized. Figure 19 depicts UCQRs are delivered to the UE along with the SSAA Success message.

An S-NSSAI may be associated with a User ID and this association may be saved in the UDM/UDR and/or AAA-S server. In an event of change in the configuration of allowed S-NSSAI for a user in the UE, UDM/UDR via SMF/AUSF may trigger SSAA process. On the other hand, there may be a case where AAA-S may belong to a 3^{rd} party. If the S-NSSAI to user configuration is updated in the AAA-S, AAA-S may trigger an SSAA to the user.

It is understood that the Network Slice-Specific Secondary Authentication Process doesn't involve SMF in the CN like the PDU session establishment procedure. However, the scope of a third-party entity having control over network functions (e.g., in a network slice) may involve AAA server or other network functions that may have a capability to contribute towards UCQRs delivery.

Step 1 of Figure 19. For S-NSSAIs that are requiring Network Slice-Specific Authentication and Authorization, based on change of subscription information, or triggered by the AAA-S, the AMF may trigger the start of the Network Slice Specific Authentication and Authorization procedure.

Step 2 of Figure 19. The AMF may request the UE User ID for EAP authentication (EAP ID) for the S-NSSAI in a NAS MM Transport message including the S-NSSAI. This is the S-NSSAI of the H-PLMN, not the locally mapped S-NSSAI value.

Steps 3-17 of Figure 19. Part of the EAP based SSAA process in Clause 4.2.9.2 of TS 23.502 [6].

Step 18 of Figure 19. Provided that UE's user has been successfully authenticated, the AMF may send a query Nudm_SDM_Get(UCQRs) to the UDM. UDM may consult with the UDR to extract UCQRs specific to the queried user from the User's Profile and User Subscription. UDM may deliver the required UCQRs back to the AMF. The UCQRs may have been placed in the UDR by an SMF or PCF.

Step 19 of Figure 19. The AMF may transmit a NAS MM Transport message (*User Centric QoS Rule(s)* [*Success*], EAP Success/Failure) to the UE as part of the authentication and authorization process. This message signifies that AMF may only transmit User Centric QoS Rule(s) if the authentication process is successful, NAS MM Transport message (EAP Failure) otherwise.

Step 20 of Figure 19. This step can correspond to Step 19 in Clause 4.2.9.2 of TS 23.502 [6].

### UCQR Rules Delivery During Secondary PDU Session Authentication Process

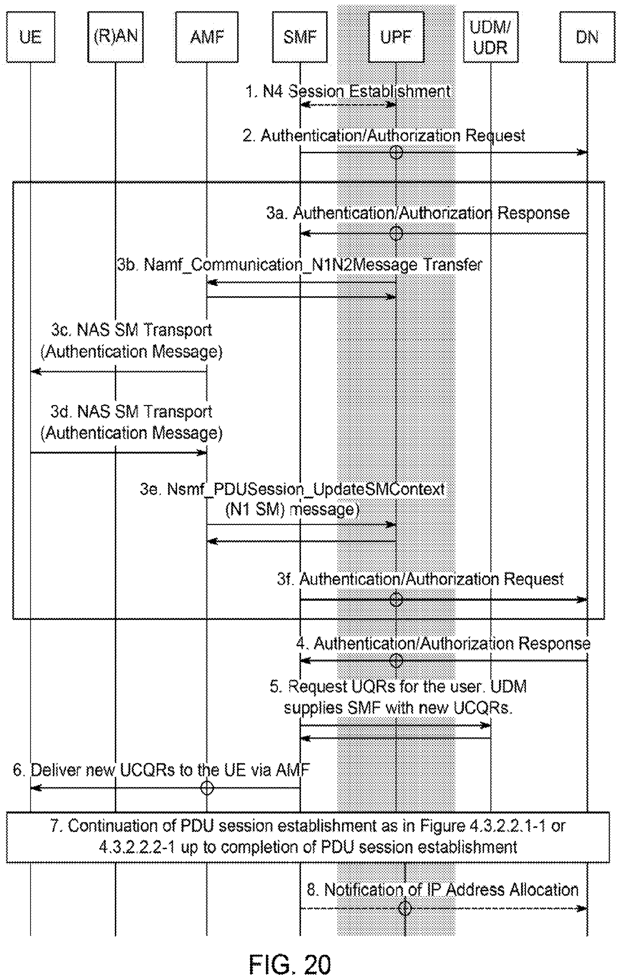

Figure 20 shows the method by which UCQRs can be delivered to the UE after secondary PDU session authentication succeeds.

The SMF determines that it needs to contact the DN-AAA server. The SMF identifies the DN-AAA server based on local configuration, possibly using the SM PDU DN Request Container provided by the UE in its NAS request. SM PDU DN Request Container may be enhanced to include User ID during the PDU session establishment request.
1. Step 1 of Figure 20 - If there is no existing N4 session that can be used to carry DN-related messages between the SMF and the DN, the SMF selects a UPF and triggers N4 session establishment.
2. Step 2 of Figure 20 - The SMF provides an enhanced SM PDU DN Request Container received from the UE in the NAS message, to the DN-AAA via the UPF. The SM PDU DN Request Container IE contains information for the PDU session authorization by the external DN. The SM PDU DN Request Container includes its DN-specific identity complying with Network Access Identifier (NAI) format and PDU session ID [9]. When available, the SMF provides the GPSI in the signalling exchanged with the DN-AAA. The UPF transparently relays the message received from the SMF to the DN-AAA server.
3. Step 3 of Figure 20 - Step 3 is the exchange of message between the UE and the DN-AAA server. The DNN-AAA server may consider the User ID of the user for authentication and authorization decisions and may determine DN Authorization Profile Index.
4. Step 4 of Figure 20 - The DN-AAA server confirms the successful authentication/authorization of the PDU Session. The DN-AAA server may provide:
   - an SM PDU DN Response Container to the SMF to indicate successful authentication/authorization;
   - DN Authorization Data as defined in TS 23.501 [12] clause 5.6.6;
   - a request to get notified with the IP address(es) allocated to the PDU Session and/or with N6 traffic routing information or MAC address(es) used by the UE for the PDU Session; and
   - an IP address (or IPV6 Prefix) for the PDU Session.
   - An indication that the UE may require a new set of UCQRs for corresponding User ID(s).
   The N6 traffic routing information is defined in TS 23.501 [12] clause 5.6.7.
   After the successful DN authentication/authorization, a session is kept between the SMF and the DN-AAA. If the SMF receives a DN Authorization Data, the SMF uses the DN Authorization Profile Index, to apply the policy and charging control (see TS 23.501 [12] clause 5.6.6).
   This DN Authorization Profile Index refers to the policy and charging control data, which may align with the requirements for the corresponding user.
5. Step 5 of Figure 20 - SMF or SMF via PCF may request UDM for UCQRs for the UE's user authenticated and authorized by the DN-AAA. UDM/UDR supplies SMF with UCQRs.
6. Step 6 of Figure 20 - The SMF via AMF delivers the new UCQRs to the UE.
7. Step 7 of Figure 20 - No change in Step 7 and 8 except the UE may establish and initiate the PDU session based on newly received User centric QoS rule(s).

### Further Optimizing UCQR Rules Delivery

As discussed earlier in this document, User IDs may have inconsistent sizes (e.g. Person-name@mno.net, Person-name.domain-id@mno.net etc.). Transmitting longer names constantly over the air may increases the amount of over-the-air signaling resources. Thus, it may be desirable to represent User IDs with a consistent size IE for optimal computing. One way to represent User IDs of users in a UE is to have a translation table, which would contain User IDs with corresponding numeric alias. For example, a user ID of person-name@mno-name.net might be translated to the number 76.

When a Subscription and User Profile are linked, the network may send, to the UE, an the alias number for the User ID.

The advantage of receiving an alias is that the alias may be an id that is local to the UE and small in size (e.g. 1 octet). So that all subsequent signaling can use this alias, reducing the amount of OTA signaling as a result.

It should be appreciated that, in all messages that are described in the paper as being sent to the UE from the Network and including a User ID, the User ID alias can be used instead.

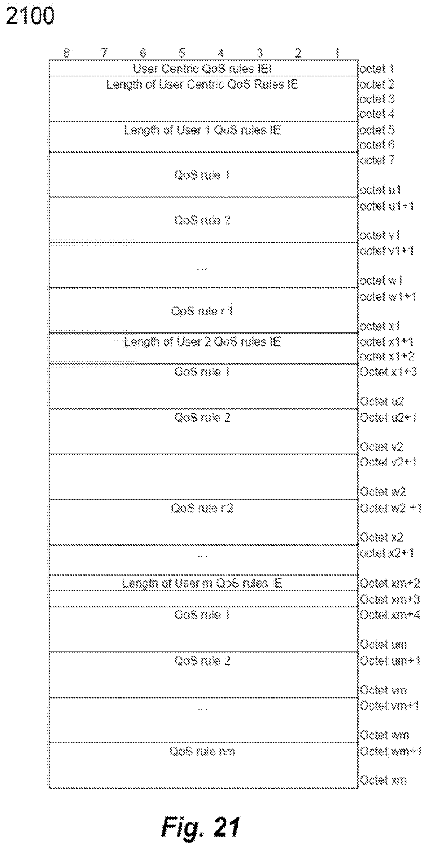

Alternatively, User IDs can be implicitly indicated in the UCQRs IE (e.g., UCQR IE 2100) by virtue of the position of each User Centric QoS Rules in the list, as shown in the Figure 21. In this case, User IDs may rather be an index of the UE in a list of UEs already configured (separately) into the UE. For example, the user's index may be the alias that was previously signaled to the UE. The implicit nature of user ID can save further resource consumption on signaling.

### GUI

Figure 9 shows an example GUI 900 that may be used by a person who is operating a cellular device to request that User ID(s) be linked and unlinked with the subscription that is associated with the cellular device. This is further described in section 5.1.

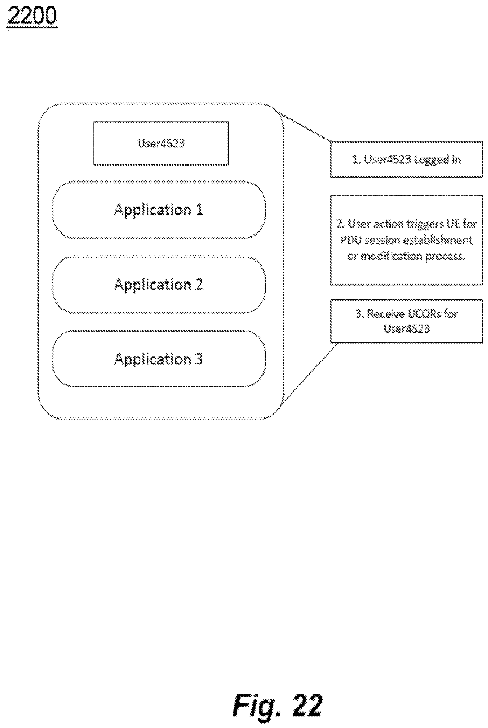

Figure 22 shows a GUI 2200 of an instance when a user logs in to a multi-user UE and the UE receives UCQRs. Multiple users may have their accounts in the UE. Each user may have access to multiple applications within their account. In Figure 22 when user logs-in into the UE with User ID, User4523. It may trigger an enhanced PDU Session Establishment or Modification procedure.

It should be noted that the ideas that are described in this disclosure could be applied in Non-Public Networks (NPNs). When the ideas are applied to NPN's, the format of the User Identifier may be such that the identity of the NPN is part of the User Identifier or the User Identifier may include a field that can resolved to the identity of the NPN by the network. This would be necessary so that the network can determine what UDM/UDR is responsible for storing the associated user profile. Alternatively, all messages and procedures that this disclosure proposes as including a User Identifier may also include a NPN Identifier to indicate that the User Identifier is associated with a Non-Public Network.

It will be understood that any of the methods and processes described herein may be embodied in the form of computer executable instructions (i.e., program code) stored on a computer-readable storage medium, and when the instructions are executed by a machine, such as a computer, server, M2M terminal device, M2M gateway device, or the like, perform and/or implement the systems, methods and processes described herein. Specifically, any of the steps, operations or functions described above may be implemented in the form of such computer executable instructions. Computer readable storage media include both volatile and nonvolatile, removable and non-removable media implemented in any method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other physical medium which can be used to store the desired information, and which can be accessed by a computer.

In describing preferred embodiments of the subject matter of the present disclosure, as illustrated in the Figures, specific terminology is employed for the sake of clarity. The claimed subject matter, however, is not intended to be limited to the specific terminology so selected, and it is to be understood that each specific element includes all technical equivalents within the scope of the appended claims that operate in a similar manner to accomplish a similar purpose.

Thus, it will be appreciated by those skilled in the art that the disclosed systems and methods can be embodied in other specific forms without departing from scope of the claims. The presently disclosed embodiments are therefore considered in all respects to be illustrative and not restricted. It is not exhaustive and does not limit the disclosure to the precise form disclosed. Modifications and variations are possible in light of the above teachings or may be acquired from practicing of the disclosure, without departing from the scope of the claims. Thus, although particular configurations have been discussed herein, other configurations can also be employed. Numerous modifications and other embodiments (e.g., combinations, rearrangements, etc.) are enabled by the present disclosure and are within the scope of one of ordinary skill in the art and are contemplated as falling within the scope of the disclosed subject matter as defined by the claims. Features of the disclosed embodiments can be combined, rearranged, omitted, etc., within the scope of the claims to produce additional embodiments. Furthermore, certain features may sometimes be used to advantage without a corresponding use of other features. Accordingly, Applicant(s) intend(s) to embrace all such alternatives, modifications, equivalents, and variations that are within the scope of the claims.

Reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. The scope of the invention is indicated by the appended claims rather than the foregoing description and all changes that come within the scope thereof are intended to be embraced therein.

### References

[1] 3GPP TR 22.904, Study on user-centric identifiers and authentication
[2] 3GPP TS 22.101, Service aspects; Service principles
[3] 3GPP TS 22.115, Service aspects; Charging and billing
[4] 3GPP S2-1906717, Study on the Usage of User Identifiers in the 5G System
[5] 3GPP TS 23.503, Policy and Charging Control Framework for the 5G System
[6] 3GPP TS 23.502, Procedures for the 5G System
[7] 3GPP S2-1904722, Introduction of Slice-Specific Authentication and Authorisation (TS 23.501)
[8] 3GPP S2-1904723, Introduction of Slice-Specific Authentication and Authorisation (TS 23.502)
[9] IETF RFC 3748, Extensible Authentication Protocol (EAP), https://tools.ietforg/html/rfc3 748
[10] IETF RFC 4187, Extensible Authentication Protocol Method for 3rd Generation Authentication and Key Agreement (EAP-AKA) (https://tools.ietf.org/html/rfc4187)
[11] 3GPP TS 24.501 Non-Access-Stratum (NAS) protocol for 5G System (5GS)
[12] 3GPP TS 23.501, System Architecture for the 5G System (5GS)

## Claims

1. A wireless transmit/receive unit, WTRU (102), comprising:
a processor (118) configured to
determine that a new user is to be associated with the WTRU;
transmit, to an access and mobility management function, AMF, an indication that the WTRU desires to associate a user identifier associated with the user with a subscription that is associated with the WTRU;
transmit, to a User Data Management Function, UDM, via the AMF, a link request message requesting the user identifier be associated with an identifier corresponding to the subscription that is associated with the WTRU;
receive, from the AMF, a registration response indicating to the WTRU that authorization of the User ID linking to the WTRU's Subscription is pending;
perform a process of authenticating the user with the wireless network based on the user identifier; and
receive, from the AMF, updated configuration information for the WTRU, wherein at least part of configuration information is associated with the user identifier, wherein the updated configuration information comprises a network slice selection assistance information, NSSAI, for the WTRU and the NSSAI comprises at least one single network slice selection assistance information, S-NSSAI, that is associated with the user identifier.

2. The WTRU of claim 1, wherein
the processor is configured to determine that the user identifier is to be associated with the subscription identifier that is associated with the WTRU based on information entered into a graphical user interface, GUI, of the WTRU.

3. The WTRU of claim 1, wherein the processor is configured to:
wirelessly pair with another WTRU, and
determine that the user identifier is to be associated with the subscription identifier that is associated with the WTRU based on the reception of the user identifier from the another WTRU.

4. The WTRU of claim 1, further comprising receiving an alias for the user ID.

5. The WTRU of claim 4, wherein
subscription identifier that is associated with the WTRU is an International Mobile Subscriber Identity, IMSI, of the WTRU.

6. The WTRU of claim 1, wherein
the updated configuration information indicates at least one additional service that is available to the WTRU and is associated with the user identifier.

7. The WTRU of claim 1, wherein
the processor is configured to update configuration information linking user identifiers to available services that are permitted to be accessed by the user identifiers upon receiving the updated configuration information.

8. The WTRU of claim 1, wherein
the processor is configured to transmit, to the AMF, a registration update request requesting access to services based on at least one of the user identifier and subscription identifier that is associated with the WTRU.

9. The WTRU of claim 1, wherein the processor is configured to transmit, to the AMF, a registration update request requesting access to services based on the user identifier and the subscription identifier corresponding to the WTRU.

10. The WTRU of claim 1, wherein the processor is configured to transmit, to the AMF, a registration update request requesting access to services based on the user identifier.

11. The WTRU of claim 8, wherein
the processor is configured to receive information identifying one or more services that the WTRU is permitted to access based on the registration update request.

12. The WTRU of claim 1, wherein
the processor is configured to store information linking each of a plurality of user identifiers with one or more services permitted to be accessed by the user identifier.

13. The WTRU of claim 1, wherein
the processor is configured to receive and store information corresponding to a policy section identifying how traffic generated at the WTRU is to be handled wherein at least one of the policy sections is associated with the user identifier.

14. A method performed by a wireless transmit/receive device, WTRU (102), the method comprising:
determining that a new user is to be associated with the WTRU;
transmitting, to an access and mobility management function, AMF, an indication that the WTRU desires to associate a user identifier associated with the user with a subscription that is associated with the WTRU;
transmitting, to a User Data Management Function, UDM, via the AMF, a link request message requesting the user identifier be associated with the subscription identifier that is associated with the WTRU;
receiving, from the AMF, a registration response indicating to the WTRU that authorization of the User ID linking to the WTRU's Subscription is pending;
performing a process of authenticating the user with the wireless network based on the user identifier; and
receiving, from the AMF, updated configuration information for the WTRU, wherein at least part of configuration information is associated with the user identifier, wherein the updated configuration information comprises a network slice selection assistance information, NSSAI, for the WTRU and the NSSAI comprises at least one single network slice selection assistance information, S-NSSAI, that is associated with the user identifier.

15. A non-transitory computer-readable medium including computer program instructions, which when executed by an WTRU (102), cause the WTRU to:
determine that a new user is to be associated with the WTRU;
transmit, to an access and mobility management function, AMF, an indication that the WTRU desires to associate a user identifier associated with the user with a subscription that is associated with the WTRU;
transmit, to a User Data Management Function, UDM, via the AMF, a link request message requesting the user identifier be associated with the subscription identifier that is associated with the WTRU;
receive, from the AMF, a registration response indicating to the WTRU that authorization of the User ID linking to the WTRU's Subscription is pending;
perform a process of authenticating the user with the wireless network based on the user identifier; and
receive, from the AMF, updated configuration information for the WTRU, wherein at least part of configuration information is associated with the user identifier, wherein the updated configuration information comprises a network slice selection assistance information, NSSAI, for the WTRU and the NSSAI comprises at least one single network slice selection assistance information, S-NSSAI, that is associated with the user identifier.

## Patentansprüche

1. Drahtlose Sende-/Empfangseinheit (Wireless Transmit/Receive Unit, WTRU) (102), umfassend:
einen Prozessor (118), der ausgelegt ist zum:
Bestimmen, dass ein neuer Benutzer der WTRU zugeordnet werden soll;
Senden, an eine Zugangs- und Mobilitätsmanagementfunktion (Access and Mobility Management Function, AMF), einer Anzeige, dass die WTRU wünscht, eine dem Benutzer zugeordnete Benutzerkennung einer Subskription zuzuordnen, welche der WTRU zugeordnet ist;
Senden, an eine Benutzerdatenmanagementfunktion (User Data Management Function, UDM) über die AMF, einer Verbindungsanforderungsnachricht, mit der angefordert wird, dass die Benutzerkennung einer Kennung zugeordnet wird, die der Subskription entspricht, welche der WTRU zugeordnet ist;
Empfangen, von der AMF, einer Registrierungsantwort, die der WTRU anzeigt, dass eine Autorisierung der Verbindung der Benutzer-ID mit der Subskription der WTRU anhängig ist;
Durchführen eines Prozesses des Authentifizierens des Benutzers in dem drahtlosen Netzwerk basierend auf der Benutzerkennung; und
Empfangen, von der AMF, aktualisierter Konfigurationsinformationen für die WTRU, wobei wenigstens ein Teil der Konfigurationsinformationen der Benutzerkennung zugeordnet ist, wobei die aktualisierten Konfigurationsinformationen eine Network Slice Selection Assistance Information, NSSAI, für die WTRU umfassen und die NSSAI mindestens eine Single Network Slice Selection Assistance Information, S-NSSAI, umfasst, welche der Benutzerkennung zugeordnet ist.

2. WTRU nach Anspruch 1, wobei
der Prozessor dafür ausgelegt ist zu bestimmen, dass die Benutzerkennung der Subskriptionskennung zugeordnet werden soll, welche der WTRU zugeordnet ist, basierend auf Informationen, die in eine grafische Benutzeroberfläche (Graphical User Interface, GUI) der WTRU eingegeben werden.

3. WTRU nach Anspruch 1, wobei der Prozessor ausgelegt ist zum:
drahtlosen Paaren mit einer anderen WTRU und Bestimmen, dass die Benutzerkennung der Subskriptionskennung zugeordnet werden soll, welche der WTRU zugeordnet ist, basierend auf dem Empfang der Benutzerkennung von der anderen WTRU.

4. WTRU nach Anspruch 1, welche ferner das Empfangen eines Alias für die Benutzer-ID umfasst.

5. WTRU nach Anspruch 4, wobei
die Subskriptionskennung, die der WTRU zugeordnet ist, eine Internationale Mobilfunk-Teilnehmerkennung (International Mobile Subscriber Identity, IMSI) der WTRU ist.

6. WTRU nach Anspruch 1, wobei
die aktualisierten Konfigurationsinformationen mindestens einen Zusatzdienst angeben, der für die WTRU verfügbar ist und der Benutzerkennung zugeordnet ist.

7. WTRU nach Anspruch 1, wobei
der Prozessor dafür ausgelegt ist, Konfigurationsinformationen zu aktualisieren, die Benutzerkennungen mit verfügbaren Diensten verbinden, auf welche durch die Benutzerkennungen beim Empfangen der aktualisierten Konfigurationsinformationen zugegriffen werden darf.

8. WTRU nach Anspruch 1, wobei
der Prozessor dafür ausgelegt ist, an die AMF eine Registrierungsaktualisierungsanforderung zu senden, mit der der Zugriff auf Dienste basierend auf der Benutzerkennung und/oder der Subskriptionskennung, die der WTRU zugeordnet ist, angefordert wird.

9. WTRU nach Anspruch 1, wobei
der Prozessor dafür ausgelegt ist, an die AMF eine Registrierungsaktualisierungsanforderung zu senden, mit der der Zugriff auf Dienste basierend auf der Benutzerkennung und der Subskriptionskennung, die der WTRU zugeordnet ist, angefordert wird.

10. WTRU nach Anspruch 1, wobei
der Prozessor dafür ausgelegt ist, an die AMF eine Registrierungsaktualisierungsanforderung zu senden, mit der der Zugriff auf Dienste basierend auf der Benutzerkennung angefordert wird.

11. WTRU nach Anspruch 8, wobei
der Prozessor dafür ausgelegt ist, Informationen zu empfangen, die einen oder mehrere Dienste identifizieren, auf welche die WTRU basierend auf der Registrierungsaktualisierungsanforderung zugreifen darf.

12. WTRU nach Anspruch 1, wobei
der Prozessor dafür ausgelegt ist, Informationen zu speichern, die jede von mehreren Benutzerkennungen mit einem oder mehreren Diensten verbinden, auf die durch die Benutzerkennung zugegriffen werden darf.

13. WTRU nach Anspruch 1, wobei
der Prozessor dafür ausgelegt ist, Informationen zu empfangen und zu speichern, die einer Policy Section entsprechen, die angibt, wie an der WTRU erzeugter Verkehr zu handhaben ist, wobei mindestens eine der Policy Sections der Benutzerkennung zugeordnet ist.

14. Verfahren, welches von einer drahtlosen Sende-/Empfangseinheit, WTRU (102), durchgeführt wird, wobei das Verfahren umfasst:
Bestimmen, dass ein neuer Benutzer der WTRU zugeordnet werden soll;
Senden, an eine Zugangs- und Mobilitätsmanagementfunktion, AMF, einer Anzeige, dass die WTRU wünscht, eine dem Benutzer zugeordnete Benutzerkennung einer Subskription zuzuordnen, welche der WTRU zugeordnet ist;
Senden, an eine Benutzerdatenmanagementfunktion, UDM, über die AMF, einer Verbindungsanforderungsnachricht, mit der angefordert wird, dass die Benutzerkennung der Subskriptionskennung zugeordnet wird, welche der WTRU zugeordnet ist;
Empfangen, von der AMF, einer Registrierungsantwort, die der WTRU anzeigt, dass eine Autorisierung der Verbindung der Benutzer-ID mit der Subskription der WTRU anhängig ist;
Durchführen eines Prozesses des Authentifizierens des Benutzers in dem drahtlosen Netzwerk basierend auf der Benutzerkennung; und
Empfangen, von der AMF, aktualisierter Konfigurationsinformationen für die WTRU, wobei wenigstens ein Teil der Konfigurationsinformationen der Benutzerkennung zugeordnet ist, wobei die aktualisierten Konfigurationsinformationen eine Network Slice Selection Assistance Information, NSSAI, für die WTRU umfassen und die NSSAI mindestens eine Single Network Slice Selection Assistance Information, S-NSSAI, umfasst, welche der Benutzerkennung zugeordnet ist.

15. Nichtflüchtiges computerlesbares Medium, welches Computerprogrammanweisungen umfasst, die, wenn sie von einer WTRU (102) ausgeführt werden, die WTRU veranlassen zum:
Bestimmen, dass ein neuer Benutzer der WTRU zugeordnet werden soll;
Senden, an eine Zugangs- und Mobilitätsmanagementfunktion, AMF, einer Anzeige, dass die WTRU wünscht, eine dem Benutzer zugeordnete Benutzerkennung einer Subskription zuzuordnen, welche der WTRU zugeordnet ist;
Senden, an eine Benutzerdatenmanagementfunktion, UDM, über die AMF, einer Verbindungsanforderungsnachricht, mit der angefordert wird, dass die Benutzerkennung der Subskriptionskennung zugeordnet wird, welche;der WTRU zugeordnet ist;
Empfangen, von der AMF, einer Registrierungsantwort, die der WTRU anzeigt, dass eine Autorisierung der Verbindung der Benutzer-ID mit der Subskription der WTRU anhängig ist;
Durchführen eines Prozesses des Authentifizierens des Benutzers in dem drahtlosen Netzwerk basierend auf der Benutzerkennung; und
Empfangen, von der AMF, aktualisierter Konfigurationsinformationen für die WTRU, wobei wenigstens ein Teil der Konfigurationsinformationen der Benutzerkennung zugeordnet ist, wobei die aktualisierten Konfigurationsinformationen eine Network Slice Selection Assistance Information, NSSAI, für die WTRU umfassen und die NSSAI mindestens eine Single Network Slice Selection Assistance Information, S-NSSAI, umfasst, welche der Benutzerkennung zugeordnet ist.

## Revendications

1. Unité d'émission-réception sans fil, WTRU, (102), comprenant :
un processeur (118) configuré pour
déterminer qu'un nouvel utilisateur doit être associé à la WTRU ;
transmettre à une fonction de gestion d'accès et de mobilité, AMF, une indication du fait que la WTRU souhaite associer un identifiant d'utilisateur associé à l'utilisateur à un abonnement associé à la WTRU ;
transmettre à une fonction de gestion de données d'utilisateur, UDM, via l'AMF, un message de demande de liaison demandant l'association de l'identifiant d'utilisateur avec un identifiant correspondant à l'abonnement associé à la WTRU ;
recevoir, en provenance de l'AMF, une réponse d'inscription indiquant à la WTRU que l'autorisation de l'ID d'utilisateur lié à l'abonnement de la WTRU est en attente ;
effectuer un processus d'authentification de l'utilisateur auprès du réseau sans fil sur la base de l'identifiant de l'utilisateur ; et
recevoir, en provenance de l'AMF, des informations de configuration mises à jour pour la WTRU, au moins une partie des informations de configuration étant associée à l'identifiant d'utilisateur, les informations de configuration mises à jour comprenant des informations d'aide à la sélection de tranche de réseau, NSSAI, pour la WTRU et les NSSAI comprenant au moins une information d'aide à la sélection d'une seule tranche de réseau, S-NSSAI, qui est associée à l'identifiant d'utilisateur.

2. WTRU selon la revendication 1, dans laquelle le processeur est configuré pour déterminer que l'identifiant d'utilisateur doit être associé à l'identifiant d'abonnement associé à la WTRU sur la base d'informations introduites dans une interface graphique d'utilisateur, GUI, de la WTRU.

3. WTRU selon la revendication 1, dans laquelle le processeur est en outre configuré pour :
s'apparier sans fil avec une autre WTRU, et
déterminez que l'identifiant d'utilisateur doit être associé à l'identifiant d'abonnement associé à la WTRU sur la base de la réception de l'identifiant d'utilisateur provenant de l'autre WTRU.

4. WTRU selon la revendication 1, comprenant en outre la réception d'un alias pour l'ID d'utilisateur.

5. WTRU selon la revendication 4, dans laquelle l'identifiant d'abonnement associé à la WTRU est une identité internationale d'abonné mobile, IMSI, de la WTRU.

6. WTRU selon la revendication 1, dans laquelle les informations de configuration mises à jour indiquent au moins un service supplémentaire disponible pour la WTRU et associé à l'identifiant d'utilisateur.

7. WTRU selon la revendication 1, dans laquelle le processeur est configuré pour mettre à jour des informations de configuration reliant des identifiants d'utilisateur à des services disponibles auxquels les identifiants d'utilisateur sont autorisés à accéder après réception des informations de configuration mises à jour.

8. WTRU selon la revendication 1, dans laquelle le processeur est configuré pour transmettre à l'AMF une demande de mise à jour d'inscription demandant l'accès à des services sur la base d'au moins l'un des identificateurs d'utilisateur et d'abonnement associés à la WTRU.

9. WTRU selon la revendication 1, dans laquelle le processeur est configuré pour transmettre à l'AMF une demande de mise à jour d'inscription demandant l'accès à des services sur la base de l'identifiant d'utilisateur et de l'identifiant d'abonnement correspondant à la WTRU.

10. WTRU selon la revendication 1, dans laquelle le processeur est configuré pour transmettre à l'AMF une demande de mise à jour d'inscription demandant l'accès à des services sur la base de l'identifiant d'utilisateur.

11. WTRU selon la revendication 8, dans laquelle le processeur est configuré pour recevoir des informations identifiant un ou plusieurs services auxquels la WTRU est autorisée à accéder sur la base de la demande de mise à jour d'inscription.

12. WTRU selon la revendication 1, dans laquelle le processeur est configuré pour stocker des informations reliant chacun d'une pluralité d'identificateurs d'utilisateur à un ou plusieurs services auxquels l'identifiant d'utilisateur est autorisé à accéder.

13. WTRU selon la revendication 1, dans laquelle le processeur est configuré pour recevoir et stocker des informations correspondant à une section de politique identifiant comment le trafic généré au niveau de la WTRU doit être géré, au moins une des sections de politique étant associée à l'identifiant d'utilisateur.

14. Procédé réalisé par un dispositif d'émission/réception sans fil, WTRU (102), le procédé comprenant :
la détermination du fait qu'un nouvel utilisateur doit être associé à la WTRU ;
la transmission, à une fonction de gestion d'accès et de mobilité, AMF, d'une indication du fait que la WTRU souhaite associer un identifiant d'utilisateur associé à l'utilisateur à un abonnement associé à la WTRU ;
la transmission, à une fonction de gestion de données d'utilisateur, UDM, via l'AMF, d'un message de demande de liaison demandant que l'identifiant d'utilisateur soit associé à l'identifiant d'abonnement associé à la WTRU ;
la réception, en provenance de l'AMF, d'une réponse d'inscription indiquant à la WTRU que l'autorisation de l'ID d'utilisateur lié à l'abonnement de la WTRU est en attente ;
la réalisation d'un processus d'authentification de l'utilisateur auprès du réseau sans fil sur la base de l'identifiant d'utilisateur ; et
la réception, en provenance de l'AMF, d'informations de configuration mises à jour pour la WTRU, au moins une partie des informations de configuration étant associée à l'identifiant d'utilisateur, les informations de configuration mises à jour comprenant des informations d'aide à la sélection de tranche de réseau, NSSAI, pour la WTRU et les NSSAI comprenant au moins une information d'aide à la sélection d'une seule tranche de réseau, S-NSSAI, qui est associée à l'identifiant d'utilisateur.

15. Support non transitoire lisible par ordinateur, comprenant des instructions de programme d'ordinateur qui, lorsqu'elles sont exécutées par une WTRU (102), amènent la WTRU à :
déterminer qu'un nouvel utilisateur doit être associé à la WTRU ;
transmettre à une fonction de gestion d'accès et de mobilité, AMF, une indication du fait que la WTRU souhaite associer un identifiant d'utilisateur associé à l'utilisateur à un abonnement associé à la WTRU ;
transmettre à une fonction de gestion des données d'utilisateur, UDM, via l'AMF, un message de demande de liaison demandant que l'identifiant d'utilisateur soit associé à l'identifiant d'abonnement associé à la WTRU ;
recevoir, en provenance de l'AMF, une réponse d'inscription indiquant à la WTRU que l'autorisation de l'ID d'utilisateur lié à l'abonnement de la WTRU est en attente ;
effectuer un processus d'authentification de l'utilisateur auprès du réseau sans fil sur la base de l'identifiant de l'utilisateur ; et
recevoir, en provenance de l'AMF, des informations de configuration mises à jour pour la WTRU, au moins une partie des informations de configuration étant associée à l'identifiant d'utilisateur, les informations de configuration mises à jour comprenant des informations d'aide à la sélection de tranche de réseau, NSSAI, pour la WTRU et les NSSAI comprenant au moins une information d'aide à la sélection d'une seule tranche de réseau, S-NSSAI, qui est associée à l'identifiant d'utilisateur.
